# EUROPÄISCHE PATENTSCHRIFT

(11) **EP 4 735 360 B1**
(45) Veröffentlichungstag und Bekanntmachung des Hinweises auf die Patenterteilung: **02.09.2026**
(21) Anmeldenummer: 24751489.6
(22) Anmeldetag: 31.07.2024
(51) Int. Cl.: B65G 17/48, B65G 19/02, B65G 47/26, B65G 47/61

(54) **HÄNGEFÖRDERSYSTEM UND VERFAHREN ZUM BETREIBEN EINES HÄNGEFÖRDERSYSTEMS**
OVERHEAD CONVEYOR SYSTEM AND METHOD FOR OPERATING AN OVERHEAD CONVEYOR SYSTEM
SYSTÈME DE TRANSPORTEUR SUSPENDU ET PROCÉDÉ POUR FAIRE FONCTIONNER UN SYSTÈME DE TRANSPORTEUR SUSPENDU

(30) Priorität: 30.08.2023 DE 102023123292
(43) Veröffentlichungstag der Anmeldung: 06.05.2026
(73) Patentinhaber: SSI Schäfer Automation GmbH (AT), 8051 Graz (AT)
(72) Erfinder: BENNING, Sebastian, 48366 Laer (DE); EXELER, André, 48161 Münster (DE)
(74) Vertreter: Witte, Weller & Partner Patentanwälte mbB
(86) Internationale Anmeldenummer: PCT/EP2024/071732
(87) Internationale Veröffentlichungsnummer: WO 2025/045494

(56) Entgegenhaltungen:
- EP-A1- 2 910 499
- EP-A1- 3 543 181
- EP-A1- 4 001 180
- EP-A1- 4 166 482
- WO-A1-2023/147620
- DE-A1- 102021 110 132

## Beschreibung

Die vorliegende Erfindung betrifft ein Hängefördersystem. Des Weiteren betrifft die vorliegende Erfindung ein Verfahren zum Betreiben eines Hängefördersystems. Schließlich betrifft die vorliegende Erfindung ein computerimplementiertes Verfahren zum Betreiben eines Fördersystems.

Hängefördersysteme gehören in vielfältigen Ausgestaltungen zum Stand der Technik. Sie werden in der Praxis für verschiedenste Transport- und/oder Lageraufgaben eingesetzt. Hängefördersysteme erlauben es, einen Großteil des Fördersystems erhöht bzw. über Kopf - z.B. an der Decke oder an einer zusätzlichen Ständerkonstruktion - zu montieren, sodass die Grundfläche frei bleibt für Fertigungsanlagen und andere Einrichtungen.

In automatisierten Warenlagern, weitläufigen Produktionsstätten und ganz allgemein bei der Förderung und dem Transport von Stückgütern haben sich Hängefördersysteme als ein effizientes Mittel für den Transport, die Zwischenpufferung, aber auch die langfristige Lagerung verschiedener Arten von Stückgütern erwiesen. Bei Hängefördersystemen werden die Stückgüter entweder auf geeignete Weise direkt an einzelnen Fördereinheiten eines Fördersystems aufgehängt, oder in entsprechende Aufnahmevorrichtungen eingebracht, die wiederum hängend an den Fördereinheiten gelagert sind.

Unter Stückgütern werden in diesem Zusammenhang allgemein einzeln transportierbare Einheiten verstanden, wie beispielsweise Werkstücke, Halbfabrikate und Fabrikate in Produktionsprozessen, Ersatzteile, Konsumgüter, Stapel von stapelbaren Gütern, beispielsweise Stapel von Druckerzeugnissen, aber auch Behältnisse und Transportträger für Waren, wie beispielsweise Kisten, Behälter, Gepäckstücke, Fässer, Pakete, Paletten, etc.

Hängefördersysteme mit Transporteinheiten sind besonders geeignet für die effiziente Förderung von heterogenen Stückgütern. So können beispielsweise in Logistikzentren von Versandhandelsfirmen solche Hängefördersysteme verwendet werden, um eine Vielzahl von Artikeln verschiedener Größe und Gewicht einzulagern, und Gruppen von Artikeln gemäß den jeweiligen Kundenaufträgen zu kommissionieren und für den Versand bereitzustellen.

In der Regel sind Hängefördersysteme der gattungsgemäßen Art als schienengeführte Hängefördersysteme ausgeführt. Üblicherweise nimmt eine erhöht installierte Führungsschiene, z.B. in Form eines Tragprofils, eine Mehrzahl von Förder- bzw. Transporteinheiten auf. Jede Transporteinheit weist in der Regel einen Laufwagen, der bspw. als sog. Carrier oder als Adapter, insbesondere als Rollenadapter, ausgebildet sein kann, und eine mit dem Laufwagen gekoppelte oder koppelbare Aufnahmeeinheit auf. Die Aufnahmeeinheit kann beispielsweise eine Transporttasche, ein Behälter, ein Beutel, ein Korb, ein Kleiderbügel, ein Transportträger o.ä. sein oder als solche ausgebildet sein. Der Laufwagen ist in der Regel bewegbar an der Führungsschiene gelagert, so dass Stückgüter, insbesondere hängend, entlang der Führungsschiene stromabwärts in einer Förderrichtung transportiert werden können.

Der Antrieb der Transporteinheiten bzw. der Laufwagen entlang der Hauptförderstrecke erfolgt vorzugsweise mittels bzw. mit Hilfe eines Kettenantriebs. Denkbar sind jedoch auch Transportsysteme, bei denen jeder Transporteinheit ein Antriebsmittel bzw. eine Antriebseinheit (z.B. ein Linearantrieb) zugeordnet ist. Beispielsweise kann jede Transporteinheit eine, insbesondere steuerbare, Antriebseinheit aufweisen, die eine individuelle Bewegbarkeit der jeweiligen Transporteinheit entlang der Förderstrecke ermöglicht.

Aus Gründen der Wirtschaftlichkeit beim Betrieb von Hängefördersystemen der gattungsgemäßen Art ist eine platzsparende Förderung von Transporteinheiten entlang einer Förderstrecke des Fördersystems erwünscht. Vor dem Hintergrund eines geringstmöglichen Platzverbrauchs ist man bestrebt, die Förder- bzw. Packungsdichte aufeinanderfolgender Transporteinheiten entlang der Förderstrecke zu erhöhen.

Beispielsweise ist aus der Druckschrift DE 10 2005 006 455 A1 eine Hängeförderanlage mit einer Fördertechnik zum Fördern von Hängefördergütern bekannt. Die Fördertechnik weist eine feste Mitnahme auf. Die Hängefördergüter werden mit einem festgelegten Transportabstand gefördert. Je kleiner der Transportabstand ist, desto größer ist die Leistung des Förderers je Zeiteinheit bei konstanter Fördergeschwindigkeit. Wenn der Transportabstand zu gering festgelegt ist und insbesondere kleiner ist als die Dicke des Hängeförderguts, können Störungen beim Betrieb der Hängeförderanlage auftreten, wenn Hängefördergüter aneinander anliegen. Wenn der Transportabstand zu groß gewählt wird, ist die Förderleistung der Hängeförderanlage reduziert.

Des Weiteren ist aus der Druckschrift EP 2 789 555 A1 z. B. eine Vorrichtung zum auftragsorientierten Bereitstellen von Einzelwaren für mehrere Aufträge aus einem Warenlager bekannt, die mindestens einen mit einem Warenlager verbundenen Zwischenspeicher zum Zwischenspeichern von Einzelwaren mindestens eines Auftrags, jeweils einen mit dem mindestens einen Zwischenspeicher verbundenen Sammelbereich zum Sammeln der Einzelwaren des mindestens einen komplettierten Auftrags und mehrere Abgabelinien aufweisenden Trennbereich zum auftragsorientierten Bereitstellen der Einzelwaren des mindestens einen komplettierten Auftrags umfasst. Bei diesem System bestimmt der feste Abstand der Adapter und feste Abstand der Mitnehmer der Antriebskette den Abstand des Transports aufeinanderfolgender Hängewaren bzw. Taschen, unabhängig davon, wie breit die Ware in Förderrichtung ist und wohin die Ware im System transportiert werden soll.

Des Weiteren ist aus der Druckschrift DE 10 2021 110 132 A1 ein Verfahren zum Betreiben eines Förderers für hintereinander folgende Güter und entsprechendes Fördersystem bekannt, bei dem die Güter nacheinander in einem Einschleuser auf den Förderer aufgegeben werden und an einer vorbestimmten Stelle des Förderers über eine Weiche ausgeschleust werden, wobei der Abstand zwischen aufeinanderfolgenden Gütern auf dem Förderer entweder minimiert wird, wenn diese aufeinanderfolgenden Güter an derselben Weiche ausgeschleust werden sollen, oder der Abstand der aufeinanderfolgenden Güter auf dem Förderer derart vergrößert wird, dass er dem minimalen Ausschleusabstand entspricht, wenn die aufeinanderfolgenden Güter nicht an derselben Weiche ausgeschleust werden sollen.

Neben dem Bedarf an einer erhöhten Förder- bzw. Packungsdichte aufeinanderfolgender Transporteinheiten entlang einer Förderstrecke gewinnt der Bedarf an einem sicheren Betrieb des Hängefördersystems zunehmend an Bedeutung, insbesondere im Hinblick auf eine kollisionsarme bzw. kollisionsfreie Förderung aufeinanderfolgender Transporteinheiten. Kollisionen von Transporteinheiten untereinander sind möglichst zu vermeiden, da sie regelmäßig zu Störungen des Förderbetriebs führen.

Hängefördersysteme weisen in der Regel gerade und horizontal und/oder vertikal gebogene Schienenabschnitte sowie Verzweigungen und/oder Zusammenführungen auf, die als Funktionsstellen zusammengefasst werden können.

Die Druckschrift EP 4 166 482 A1 offenbart den Oberbegriff des unabhängigen Anspruchs 1. Sie beschreibt eine Hängefördertechnik zum Fördern von Hängeadaptern entlang einer Förderrichtung, umfassend eine erste Hängeförderstrecke, eine fördertechnisch mit der ersten Hängeförderstrecke verbundene Funktions-Hängeförderstrecke, die ein Ausschleuseelement zum Ausschleusen von Hängeadaptern aus der Hängefördertechnik aufweist, eine stromaufwärts der Funktions-Hängeförderstrecke angeordnete Vereinzelungseinheit zum vereinzelten Zuführen der Hängeadapter in die Funktions-Hängeförderstrecke, eine stromaufwärts der Vereinzelungseinheit angeordnete erste Identifikationseinheit zum Identifizieren auszuschleusender Hängeadapter, eine stromabwärts der Vereinzelungseinheit angeordnete zweite Identifikationseinheit zum Identifizieren auszuschleusender Hängeadapter und eine Steuerungseinheit zum automatischen Fördern und Ausschleusen der Hängeadapter, wobei die Steuerungseinheit mit dem Ausschleuseelement, der ersten Identifikationseinheit, der zweiten Identifikationseinheit und der Vereinzelungseinheit in Signalverbindung steht.

Erfindungsgemäß ist erkannt worden, dass sich insbesondere in Ausschleusstellen des Hängefördersystems, an denen Transporteinheiten von der Hauptförderstrecke ausgeschleust werden, ein erhöhtes Kollisionsrisiko aufeinanderfolgender Transporteinheiten ergibt, dem bislang nicht hinreichend Rechnung getragen wurde. Dieses erhöhte Kollisionsrisiko erwächst aus dem Umstand, dass bei der Ausschleusung eine Verzögerung der auszuschleusenden Transporteinheit eintritt, was dazu führen kann, dass eine nachfolgende, stromaufwärtige Transporteinheit, die die Förder- bzw. Hauptstrecke nicht verlassen soll, mit der vorauseilenden, auszuschleusenden Transporteinheit kollidiert, was den Ausschleusmechanismus stören oder gar beschädigen und den Förderbetrieb beeinträchtigen kann.

Vor diesem Hintergrund ist es eine Aufgabe der vorliegenden Erfindung, das Fördern von Transporteinheiten in einem Hängefördersystem zu verbessern, insbesondere eine störungsarme bzw. störungsfreie Förderung mit größtmöglicher Leistungseffizienz zu gewährleisten. Insbesondere ist es eine Aufgabe der vorliegenden Erfindung, einen sicheren und effizienten Transport aufeinanderfolgender Transporteinheiten eines Hängefördersystems, insbesondere an Funktionsstellen, sicherzustellen.

Diese Aufgabe wird gelöst durch ein Hängefördersystem gemäß Anspruch 1 und durch ein Verfahren gemäß Anspruch 11.

Gemäß einem ersten Aspekt der vorliegenden Erfindung wird ein Hängefördersystem gemäß Anspruch 1 bereitgestellt, das aufweist: eine Mehrzahl von Transporteinheiten zur Güterbeförderung; einen Hängeförderer zum Fördern der Mehrzahl von Transporteinheiten entlang einer Förderstrecke des Hängeförderers stromabwärts in einer Förderrichtung; zumindest eine Einschleuseinrichtung, die dazu ausgebildet ist, die Mehrzahl von Transporteinheiten nacheinander auf die Förderstrecke des Hängeförderers einzuschleusen; eine erste Ausschleuseinrichtung zum Ausschleusen von Transporteinheiten von der Förderstrecke, die stromabwärts der zumindest einen Einschleuseinrichtung in oder an der Förderstrecke angeordnet ist; und eine Steuereinrichtung zur Steuerung der zumindest einen Einschleuseinrichtung und/oder der Mehrzahl von Transporteinheiten; wobei die Steuereinrichtung dazu eingerichtet ist, einen ersten Abstand zwischen zwei aufeinanderfolgenden Transporteinheiten der Mehrzahl von Transporteinheiten auf dem Hängeförderer einzustellen, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren; wobei die Steuereinrichtung dazu eingerichtet ist, einen zweiten Abstand zwischen den zwei aufeinanderfolgenden Transporteinheiten der Mehrzahl von Transporteinheiten auf dem Hängeförderer einzustellen, wenn die stromaufwärtige Transporteinheit der zwei aufeinanderfolgenden Transporteinheiten dazu bestimmt ist, über die erste Ausschleuseinrichtung ausgeschleust zu werden, und die stromabwärtige Transporteinheit der zwei aufeinanderfolgenden Transporteinheiten dazu bestimmt ist, die erste Ausschleuseinrichtung entlang der Förderstrecke zu passieren; und wobei der erste Abstand größer als der zweite Abstand ist.

Mit anderen Worten wird zwischen zwei aufeinanderfolgenden Transporteinheiten der Mehrzahl von Transporteinheiten in einem ersten Fall, in dem die vorauseilende bzw. stromabwärtige Transporteinheit der zwei aufeinanderfolgenden Transporteinheiten über die erste Ausschleuseinrichtung von der Förderstrecke ausgeschleust werden soll und die nachfolgende bzw. stromaufwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, ein größerer Abstand eingestellt als in einem zweiten Fall, in dem die vorauseilende bzw. stromabwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, und die nachfolgende bzw. stromaufwärtige Transporteinheit der zwei aufeinanderfolgenden Transporteinheiten über die erste Ausschleuseinrichtung von der Förderstrecke ausgeschleust werden soll.

In dem ersten Fall, in dem die vorauseilende bzw. stromabwärtige Transporteinheit der zwei aufeinanderfolgenden Transporteinheiten über die erste Ausschleuseinrichtung von der Förderstrecke ausgeschleust werden soll und die nachfolgende bzw. stromaufwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, besteht ein erhöhtes Kollisionsrisiko, so dass erfindungsgemäß ein vergrößerter Abstand zwischen den zwei aufeinanderfolgenden Transporteinheiten eingestellt wird.

In dem zweiten Fall, in dem die vorauseilende bzw. stromabwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, und die nachfolgende bzw. stromaufwärtige Transporteinheit der zwei aufeinanderfolgenden Transporteinheiten über die erste Ausschleuseinrichtung von der Förderstrecke ausgeschleust werden soll, besteht hingegen kein bzw. ein vermindertes Kollisionsrisiko, da allenfalls die nachfolgende Transporteinheit der zwei aufeinanderfolgenden Transporteinheiten während des Ausschleusens verlangsamt wird, nicht jedoch die vorauseilende Transporteinheit der zwei aufeinanderfolgenden Transporteinheiten. Erfindungsgemäß wird in diesem zweiten Fall demnach ein kleinerer Abstand zwischen den zwei aufeinanderfolgenden Transporteinheiten eingestellt.

Wenn eine Transporteinheit an einer Abgabestelle wie der ersten Ausschleuseinrichtung ausgeschleust wird, beispielsweise, um auf einen weiterführenden Hängeförderer übergeben zu werden, kann es zu einer Verzögerung der Transporteinheit kommen. Diese Verzögerung kann dazu führen, dass die nachfolgende Transporteinheit auffährt. Kommen sich die Transporteinheiten hierbei sehr nahe, kann es passieren, dass die nachfolgende Transporteinheit der zwei aufeinanderfolgenden Transporteinheiten unabsichtlich an derselben Abgabestelle bzw. Ausschleusstelle die Hauptförderstrecke verlässt wie die vorauseilende Transporteinheit. Zudem besteht die Gefahr, dass eine Aufnahmeeinheit der nachfolgenden Transporteinheit die Aufnahmeeinheit der vorauseilenden Transporteinheit berührt, was insbesondere bei hängenden Aufnahmeeinheiten wie z.B. Hängefördertaschen dazu führen kann, dass sich zumindest eine der kollidierenden Aufnahmeeinheiten eindreht. Dies kann zu einer weiteren Verzögerung der ausgeschleusten bzw. abgegebenen Transporteinheit führen, wodurch im Weiteren ein Ziel in der Abgabestrecke nicht rechtzeitig erreicht wird oder gar die ausgeschleuste bzw. abgegebene Aufnahmeeinheit vollständig gedreht wird, so dass die Ausschleusstrecke blockiert und manuell gelöst werden muss. Durch die erfindungsgemäße Einstellung des ersten Abstandes wird dieses Verhalten möglichst vermieden. Der (kleinere) zweite Abstand ist in der Regel unproblematisch, da bei der Ausschleusung der nachfolgenden Transporteinheit der Abstand zur vorauseilenden Transporteinheit in aller Regel noch vergrößert wird. Zudem ist eine Berührung eines entlang der Förderstrecke an der ersten Ausschleuseinrichtung vorbeigeförderten Transporteinheit durch eine nachfolgende, an der Ausschleuseinrichtung ausgeschleuste Transporteinheit folgenlos.

Durch wahlweises Einstellen des zweiten Abstandes kann infolge der erhöhten Förder- bzw. Packungsdichte der Transporteinheiten entlang der Förderstrecke ein geringstmöglicher Platzverbrauch sichergestellt werden, ohne die Sicherheit des Hängefördersystems zu beeinträchtigen. Durch wahlweises Einstellen des ersten Abstandes kann das Kollisionsrisiko an einem Ausschleusbereich reduziert und somit ein störungsarmer bzw. störungsfreier Förderbetrieb sichergestellt werden. Auf diese Weise kann eine störungsarme bzw. störungsfreie Förderung mit größtmöglicher Leistungseffizient gewährleistet werden. Insbesondere bewirkt die erfindungsgemäße Abstandseinstellung eine Optimierung des Hängefördersystems hinsichtlich eines für die Förderleistung kleinstmöglichen Transportabstands einerseits und hinsichtlich des für den störungsfreien Betrieb mindestens erforderlichen Transportabstands andererseits. Vorzugsweise erfolgt das wahlweise Einstellen des ersten Abstandes oder des zweiten Abstandes zwischen den zwei aufeinanderfolgenden Transporteinheiten während des Einschleusens der Transporteinheiten auf die Förderstrecke des Hängeförderers. Alternativ kann das wahlweise Einstellen des ersten Abstandes oder des zweiten Abstandes zwischen den zwei aufeinanderfolgenden Transporteinheiten zeitlich nach dem Einschleusen der Transporteinheiten auf die Förderstrecke des Hängeförderers erfolgen

Die Einstellung des Abstandes zwischen zwei aufeinanderfolgenden Transporteinheiten der Mehrzahl von Transporteinheiten erfolgt vorzugsweise mittels der Steuereinrichtung. Vorzugsweise ist die Steuereinrichtung dazu ausgebildet oder eingerichtet, den Hängeförderer und/oder die Mehrzahl von Transporteinheiten und/oder die zumindest eine Einschleuseinrichtung zu steuern, um einen Abstand zwischen zwei aufeinanderfolgenden Transporteinheiten auf dem Hängeförderer einzustellen.

Die Einstellung des Abstandes zwischen zwei aufeinanderfolgenden Transporteinheiten kann beispielsweise durch Steuern der zumindest einen Einschleuseinrichtung, die vorzugsweise mit der Steuereinrichtung zum Datenaustausch in Verbindung steht, erfolgen. In dieser Ausgestaltung wird der Abstand zwischen zwei aufeinanderfolgenden Transporteinheiten bereits an einem Aufgabepunkt auf den Hängeförderer eingestellt. Die zumindest eine Einschleuseinrichtung ist vorzugsweise dazu ausgebildet, die Transporteinheiten vereinzelt auf den Hängeförderer bzw. auf eine Förderstrecke des Hängeförderers aufzugeben. Mit anderen Worten kann der Abstand zwischen zwei aufeinanderfolgenden Transporteinheiten bereits bei der Vereinzelung, d.h. bei der Zuführung zu der Förderstrecke des Hängeförderers, eingestellt werden. Eine Abstandseinstellung mittels der zumindest einen Einschleuseinrichtung ist insbesondere dann vorteilhaft, wenn der Hängeförderer einen Kettenantrieb zum Fördern der Transporteinheiten entlang der Förderstrecke aufweist. Derartige Kettenantriebe umfassen in der Regel eine Förderkette, die Mitnehmer zum Mitnehmen der Transporteinheiten bzw. der Laufwagen der Transporteinheiten aufweist und vorzugsweise umlaufend ausgeführt ist. Die Mitnehmer weisen üblicherweise eine, insbesondere konstante, Teilung auf, so dass der Abstand zwischen zwei aufeinanderfolgenden Transporteinheiten einem ganzzahligen Vielfachen der Teilung entspricht. Im Falle eines Kettenantriebes kann der Abstand zwischen zwei aufeinanderfolgenden Transporteinheiten demnach durch entsprechende Besetzung der Mitnehmer mit Transporteinheiten eingestellt werden.

Alternativ oder zusätzlich kann die Einstellung des Abstandes zwischen zwei aufeinanderfolgenden Transporteinheiten durch Steuern, mittels der Steuereinrichtung, jeder Transporteinheit der Mehrzahl von Transporteinheiten erfolgen. Dies ist beispielsweise dann von Vorteil, wenn die Transporteinheiten individuell entlang der Förderstrecke des Hängeförderers bewegbar sind. Der Ausdruck "individuell bewegbar" meint, dass jede Transporteinheit unabhängig von anderen Transporteinheiten entlang der Förderstrecke bewegt werden kann. Beispielsweise kann jede Transporteinheit eine, insbesondere steuerbare, Antriebseinheit aufweisen. Hierbei kann es sich beispielsweise um einen motorischen, insbesondere elektromotorischen, Antrieb handeln. Beispielsweise kann jede Transporteinheit bzw. jeder Laufwagen einen Linearantrieb aufweisen. Die Antriebseinheiten können über die Steuereinrichtung ansteuerbar sein, um eine Bewegung (z.B. eine Bewegungsgeschwindigkeit, etc.) der jeweiligen Transporteinheit bzw. des jeweiligen Laufwagens zur Abstandseinstellung zu steuern.

Denkbar ist auch, dass die Einstellung des Abstandes zwischen zwei aufeinanderfolgenden Transporteinheiten durch Steuern, mittels der Steuereinrichtung, des Hängeförderers erfolgt. Vorzugsweise steht der Hängeförderer mit der Steuereinrichtung zum Datenaustausch in Verbindung. Dies kann insbesondere dann von Vorteil sein, wenn der Hängeförderer eine Abstandseinstellung zwischen aufeinanderfolgenden Transporteinheiten ermöglicht. Beispielsweise kann der Hängeförderer einen Kettenantrieb o.ä. mit, insbesondere steuerbaren, Mitnehmern zur Mitnahme der Transporteinheiten aufweisen, die in Förderrichtung verstellbar sind.

Die Förderstrecke weist vorzugsweise zumindest eine Führungsschiene bzw. Laufschiene auf, an der die Mehrzahl von Transporteinheiten, insbesondere in Förderrichtung, verschiebbar gelagert sind. Es versteht sich, dass die stromabwärtige Transporteinheit der zwei aufeinanderfolgenden Transporteinheiten und die stromaufwärtige Transporteinheit der zwei aufeinanderfolgenden Transporteinheiten nicht zwingend an einer (einzigen) Führungsschiene aufgenommen sein müssen. Denkbar ist auch, dass die stromabwärtige Transporteinheit der zwei aufeinanderfolgenden Transporteinheiten und die stromaufwärtige Transporteinheit der zwei aufeinanderfolgenden Transporteinheiten an zwei verschiedenen Führungsschienen aufgenommen sind, die vorzugsweise zumindest abschnittsweise parallel zueinander verlaufen. Auch in dieser Konstellation kann sich die eingangs erwähnte Kollisionsproblematik ergeben.

Die erste Ausschleuseinrichtung kann beispielsweise eine, insbesondere steuerbare, Weiche aufweisen oder sein, die vorzugsweise durch eine verstellbare Verschiebeeinheit, insbesondere eine Weichenzunge, eine Überleitung von Transporteinheiten von der Hauptförderstrecke auf eine Ausschleusstrecke ermöglicht. Die Ausschleusstrecke zweigt vorzugsweise von der Förderstrecke ab. Die Ausschleusstrecke kann beispielsweise eine bogenförmige bzw. gekrümmte Förderschiene aufweisen oder sein, so dass eine an der ersten Ausschleuseinrichtung ausgeschleuste Transporteinheit einer Kurvenbahn folgt.

Es versteht sich, dass für jede Transporteinheit der Mehrzahl von Transporteinheiten vorbekannt ist, ob eine Ausschleusung der jeweiligen Transporteinheit von der Hauptstrecke über die erste Ausschleuseinrichtung erfolgen soll oder nicht. Beispielsweise kann ein Ausschleusziel der jeweiligen Transporteinheit vorbestimmt und bspw. in einer Datenbank oder einem Datenträger hinterlegt sein, um durch die Steuereinrichtung ausgelesen zu werden.

In Ausnahmefällen oder bei besonderen Betriebsarten des Hängefördersystems kann für einzelne oder alle Transporteinheiten vorgesehen sein, nach der Einschleusung auf die Förderstrecke das Ausschleusziel festzulegen oder ein vorbestimmtes Ausschleusziel zu ändern. Die Abstände vor und hinter diesen Transporteinheiten, also zur nächsten stromabwärtigen und zur nächsten stromaufwärtigen Transporteinheit, müssen dann so eingestellt bzw. bestimmt werden, dass entsprechend den beschriebenen Abstandsregeln ein störungsarmer Betrieb unter allen Bedingungen erfüllt wird. Hierzu wird berücksichtigt, dass bzgl. des Einschleusabstandes zu einer nächsten stromabwärtigen Transporteinheit die stromabwärtige Transporteinheit an der ersten Ausschleuseinrichtung ausgeschleust wird und diese Transporteinheit die erste Ausschleuseinrichtung passiert und dass bzgl. des Einschleusabstandes zu einer nächsten stromaufwärtigen Transporteinheit diese Transporteinheit an der ersten Ausschleuseinrichtung ausgeschleust wird die stromaufwärtige Transporteinheit die erste Ausschleuseinrichtung passiert.

Vorzugsweise ist die Steuereinrichtung oder eine Auswerteeinheit der Steuereinrichtung dazu eingerichtet, auf Basis von Ausschleusungsdaten, die vorzugsweise ein Ausschleusungsziel jeder Transporteinheit der Mehrzahl von Transporteinheiten angeben, zu bestimmen, ob die jeweilige Transporteinheit der zwei aufeinanderfolgenden Transporteinheiten der Mehrzahl von Transporteinheiten dazu bestimmt ist, an der ersten Ausschleuseinrichtung ausgeschleust zu werden oder nicht. Insbesondere kann die Steuereinrichtung dazu eingerichtet sein, auf Basis der Ausschleusungsdaten zu bestimmen, ob die jeweilige Transporteinheit der zwei aufeinanderfolgenden Transporteinheiten der Mehrzahl von Transporteinheiten dazu bestimmt ist, an der ersten Ausschleuseinrichtung ausgeschleust zu werden oder die erste Ausschleuseinrichtung entlang der Haupt- bzw. Förderstrecke zu passieren.

Die Ausschleusungsdaten können bspw. in einem Datenträger des Hängefördersystems, der vorzugsweise mit der Steuereinrichtung zum, insbesondere drahtlosen, Datenaustausch in Verbindung steht, abgelegt sein und durch die Steuereinrichtung bei Bedarf ausgelesen und/oder ausgewertet werden. Der Datenträger kann beispielsweise ein RFID-Chip oder ein QR-Code sein, der mittels einer mit dem Datenträger und/oder der Steuereinrichtung zum, insbesondere drahtlosen, Datenaustausch in Verbindung stehenden Auslesevorrichtung des Hängefördersystems in Form eines Transponderlesers, insbesondere im Vorbeifahren der Transporteinheiten, ausgelesen werden kann. Der Datenträger kann bspw. an der Transporteinheit, insbesondere an einem zu transportierenden Hängefördergut oder an einem Laufwagen, angebracht sein.

Denkbar ist auch, dass die Ausschleusungsdaten nicht unmittelbar auf dem Datenträger gespeichert sind, sondern über ein Identifikationsmittel wie beispielsweise einen Barcode, einen QR-Code und/oder eine eindeutige Identifikationsnummer des Laufwagens der jeweiligen Transporteinheit eine Identifikation der Transporteinheit und/oder des Hängeförderguts erfolgt und das jeweilige Ausschleusziel in der Steuereinrichtung bzw. einer Datenbank der Steuereinrichtung hinterlegt ist. Es ist dann mittels der Steuereinrichtung möglich, das Ausschleusziel der jeweiligen Transporteinheit eindeutig zuzuordnen, bspw. mit Hilfe von sogenannten Umsetzungstabellen bzw. Lookup-Tabellen.

Vorzugsweise weisen die Transporteinheiten jeweils eine Aufnahmeeinheit und/oder einen Laufwagen, insbesondere an welchem die Aufnahmeeinheiten jeweils befestigbar sind, auf. Die Aufnahmeeinheiten können bspw. Taschen, insbesondere Hängefördertaschen, Behälter, Körbe, Schachteln, Transportträger, Kleiderbügel o.ä. sein oder als solche ausgebildet sein. Taschen zum Einsatz in einem Hängefördersystem sind bspw. aus der Druckschrift DE 10 2012 018 925 A1 bekannt. Vorzugsweise weist die Transporteinheit das zu transportierende Fördergut auf.

Unter einer Mehrzahl von Transporteinheiten werden vorliegend zumindest zwei (d.h. zwei oder mehr) Transporteinheiten verstanden.

Das Hängefördersystem kann eine oder mehrere Einschleuseinrichtungen zur Einschleusung von Transporteinheiten auf die Förderstrecke des Hängeförderers aufweisen. Im Falle mehrerer Einschleuseinrichtungen sind diese vorzugsweise entlang der Förderstrecke des Hängeförderers stromabwärts in einer Förderrichtung voneinander beabstandet.

Gemäß einem zweiten Aspekt der vorliegenden Erfindung wird ein Verfahren zum Betreiben eines Hängefördersystems gemäß Anspruch 11 bereitgestellt, das eine Mehrzahl von Transporteinheiten zur Güterbeförderung, einen Hängeförderer zum Fördern der Mehrzahl von Transporteinheiten entlang einer Förderstrecke stromabwärts in einer Förderrichtung, zumindest eine Einschleuseinrichtung, und eine erste Ausschleuseinrichtung zur Ausschleusung von Transporteinheiten von der Förderstrecke, die stromabwärts der zumindest einen Einschleuseinrichtung in oder an der Förderstrecke angeordnet ist, aufweist, mit den folgenden Schritten:
- Einschleusen, mittels der zumindest einen Einschleuseinrichtung, der Mehrzahl von Transporteinheiten auf die Förderstrecke des Hängeförderers, wobei die Transporteinheiten nacheinander auf die Förderstrecke aufgegeben werden,
- Erstes Einstellen eines ersten Abstandes zwischen zwei aufeinanderfolgenden Transporteinheiten der Mehrzahl von Transporteinheiten, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren, und
- Zweites Einstellen eines zweiten Abstandes zwischen den zwei aufeinanderfolgenden Transporteinheiten der Mehrzahl von Transporteinheiten, wenn die stromaufwärtige Transporteinheit der zwei aufeinanderfolgenden Transporteinheiten dazu bestimmt ist, über die erste Ausschleuseinrichtung ausgeschleust zu werden, und die stromabwärtige Transporteinheit der zwei aufeinanderfolgenden Transporteinheiten dazu bestimmt ist, die erste Ausschleuseinrichtung entlang der Förderstrecke zu passieren, wobei der erste Abstand größer als der zweite Abstand ist.

Das (wahlweise) Einstellen des ersten Abstandes oder des zweiten Abstandes erfolgt vorzugsweise während des Einschleusens der Mehrzahl von Transporteinheiten auf die Förderstrecke, d.h. während die Transporteinheiten mittels der zumindest einen Einschleuseinrichtung auf den Hängeförderer aufgegeben werden. Dies ist insbesondere dann wünschenswert, wenn der eingestellte Abstand auf der Förderstrecke, also nach der Einschleusung, fest bzw. unveränderlich ist. Dies ist beispielsweise bei einem Kettenantrieb der Fall, bei dem die Positionen der Mitnehmer entlang der Schleppkette fest sind.

Alternativ kann das (wahlweise) Einstellen des ersten Abstandes oder des zweiten Abstandes zeitlich nach dem Einschleusen der Mehrzahl von Transporteinheiten auf die Förderstrecke erfolgen, d.h. nachdem die Transporteinheiten nacheinander mittels der zumindest einen Einschleuseinrichtung auf den Hängeförderer aufgegeben wurden. Eine Abstandseinstellung, die zeitlich nach dem Einschleusen erfolgt, kann insbesondere dann wünschenswert sein, wenn der Abstand zwischen zwei aufeinanderfolgenden Transporteinheiten auf der Förderstrecke veränderlich ist. Dies kann bspw. der Fall sein, wenn die Transporteinheiten individuell entlang der Förderstrecke angetrieben werden. Eine Abstandseinstellung zeitlich nach dem Einschleusen der Mehrzahl von Transporteinheiten kann bspw. auch dann sinnvoll sein, wenn die Mitnehmer entlang der Schleppkette des Kettenantriebs (in Förderrichtung) zur Abstandseinstellung verstellbar sind.

Die vorliegende Offenbarung benennt auch ein Beispiel eines computerimplementierten Verfahrens zum Betreiben eines Hängefördersystems, das eine Mehrzahl von Transporteinheiten zur Güterbeförderung, einen Hängeförderer zum Fördern der Mehrzahl von Transporteinheiten entlang einer Förderstrecke stromabwärts in einer Förderrichtung, zumindest eine Einschleuseinrichtung, und eine erste Ausschleuseinrichtung zur Ausschleusung von Transporteinheiten von der Förderstrecke, die stromabwärts der Einschleuseinrichtung in oder an der Förderstrecke angeordnet ist, aufweist, mit den folgenden Schritten:
- Erstes Steuern der zumindest einen Einschleuseinrichtung, um die Mehrzahl von Transporteinheiten nacheinander auf die Förderstrecke des Hängeförderers einzuschleusen;
- Zweites Steuern des Hängeförderers und/oder der zumindest einen Einschleuseinrichtung und/oder der Mehrzahl von Transporteinheiten, um einen ersten Abstand zwischen zwei aufeinanderfolgenden Transporteinheiten der Mehrzahl von Transporteinheiten einzustellen, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren;
- Drittes Steuern des Hängeförderers und/oder der zumindest einen Einschleuseinrichtung und/oder der Mehrzahl von Transporteinheiten, um einen zweiten Abstand zwischen den zwei aufeinanderfolgenden Transporteinheiten der Mehrzahl von Transporteinheiten einzustellen, wenn die stromaufwärtige Transporteinheit der zwei aufeinanderfolgenden Transporteinheiten dazu bestimmt ist, über die erste Ausschleuseinrichtung ausgeschleust zu werden, und die stromabwärtige Transporteinheit der zwei aufeinanderfolgenden Transporteinheiten dazu bestimmt ist, die erste Ausschleuseinrichtung entlang der Förderstrecke zu passieren, wobei der erste Abstand größer als der zweite Abstand ist.

Gemäß einem weiteren Beispiel wird ein Hängefördersystem bereitgestellt, das aufweist:
eine Mehrzahl von Transporteinheiten zur Güterbeförderung; einen Hängeförderer zum Fördern der Mehrzahl von Transporteinheiten entlang einer Förderstrecke des Hängeförderers stromabwärts in einer Förderrichtung; zumindest eine Einschleuseinrichtung, die dazu ausgebildet ist, die Mehrzahl von Transporteinheiten nacheinander auf die Förderstrecke des Hängeförderers einzuschleusen; eine erste Ausschleuseinrichtung zum Ausschleusen von Transporteinheiten von der Förderstrecke, die stromabwärts der zumindest einen Einschleuseinrichtung in oder an der Förderstrecke angeordnet ist; und
eine Steuereinrichtung zur Steuerung des Hängeförderers und/oder der zumindest einen Einschleuseinrichtung und/oder der Mehrzahl von Transporteinheiten, wobei die Steuereinrichtung dazu eingerichtet ist, einen ersten Abstand zwischen zwei aufeinanderfolgenden Transporteinheiten der Mehrzahl von Transporteinheiten auf dem Hängeförderer einzustellen, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren; wobei die Steuereinrichtung dazu eingerichtet ist, eine Größe des ersten Abstandes zwischen den zwei aufeinanderfolgenden Transporteinheiten der Mehrzahl von Transporteinheiten auf dem Hängeförderer basierend auf einer, insbesondere körperlichen, Ausdehnung und/oder einer Masse der stromabwärtigen Transporteinheit und/oder der stromaufwärtigen Transporteinheit der zwei aufeinanderfolgenden Transporteinheiten zu bestimmen.

Eine massenabhängige und/oder größenabhängige Abstandssteuerung kann in Fällen, in denen die stromabwärtige, vorauseilende Transporteinheit der zwei aufeinanderfolgenden Transporteinheiten über die erste Ausschleuseinrichtung von der Förderstrecke ausgeschleust werden soll, die nachfolgende Transporteinheit der zwei aufeinanderfolgenden Transporteinheiten hingegen an der ersten Ausschleuseinrichtung vorbeigefördert werden soll, ohne über die erste Ausschleuseinrichtung ausgeschleust zu werden, besonders zur Reduzierung des Kollisionsrisikos in Ausschleusbereichen beitragen. Dieser Erkenntnis liegt einerseits zugrunde, dass die stromabwärtige, über die erste Ausschleuseinrichtung auszuschleusende Transporteinheit der zwei aufeinanderfolgenden Transporteinheiten während des Ausschleusens eine umso größere Verzögerung erfährt, je größer die Masse, bzw. die träge Masse, der stromabwärtigen Transporteinheit und/oder die Größe der stromabwärtigen Transporteinheit ist. Zum anderen liegt dieser Erkenntnis zugrunde, dass die stromaufwärtige, nachfolgende Transporteinheit der zwei aufeinanderfolgenden Transporteinheiten, welche die erste Ausschleuseinrichtung passiert, der stromabwärtigen, an der ersten Ausschleuseinrichtung auszuschleusenden Transporteinheit aufgrund der Verzögerung der auszuschleusenden Transporteinheit in Richtung der (geraden) Förderstrecke im Ausschleusbereich näher kommt. Ist nun zumindest eine Transporteinheit der zwei aufeinanderfolgenden Transporteinheiten der Mehrzahl von Transporteinheiten besonders groß bzw. sperrig, steigt das Risiko einer Kollision zwischen den zwei aufeinanderfolgenden Transporteinheiten erheblich.

Daher ist vorgesehen, eine Größe (d.h. einen Betrag) des ersten Abstandes zwischen den zwei aufeinanderfolgenden Transporteinheiten der Mehrzahl von Transporteinheiten auf dem Hängeförderer basierend auf einer, insbesondere körperlichen oder räumlich-körperlichen, Ausdehnung und/oder einer Masse zumindest einer der stromabwärtigen Transporteinheit oder der stromaufwärtigen Transporteinheit der zwei aufeinanderfolgenden Transporteinheiten einzustellen.

Unter der Ausdehnung einer Transporteinheit wird vorliegend eine, insbesondere körperlich-räumliche oder strukturelle, Charakteristik (z.B. eine Abmessung oder Größe) der Transporteinheit, insbesondere der Aufnahmeeinheit der Transporteinheit, verstanden. Die Ausdehnung einer Transporteinheit kann bspw. eine Tiefe bzw. Dicke der Transporteinheit in Förderrichtung und/oder eine Breite der Transporteinheit quer zur Förderrichtung und/oder eine Höhe der Transporteinheit und/oder ein Volumen der Transporteinheit oder eine andere geometrische Dimension umfassen. Mit anderen Worten kann die Ausdehnung einer Transporteinheit bspw. zumindest eines von einer Tiefe, einer Breite, einer Höhe, einem Volumen oder einer anderen geometrischen Dimension der Transporteinheit umfassen.

Die Informationen bezüglich der Ausdehnung und/oder der Masse der jeweiligen Transporteinheit können messtechnisch ermittelt oder vorbestimmt und hinterlegt sein, um von der Steuereinrichtung ausgelesen zu werden. Beispielsweise können die Informationen bezüglich der Ausdehnung und/oder der Masse der jeweiligen Transporteinheit messtechnisch ermittelt oder aus einem Datenträger bzw. einer Datenbank ausgelesen werden. Vorzugsweise weist das Hängefördersystem zumindest eine Ermittlungseinrichtung auf, die eingerichtet ist, die Ausdehnung und/oder die Masse einer Transporteinheit zu ermitteln. Die, insbesondere steuerbare, Ermittlungseinrichtung steht vorzugsweise mit der Steuereinrichtung des Hängefördersystems zum Datenaustausch in Verbindung.

Die Ermittlungseinrichtung kann in Ausgestaltungen einen optischen Sensor, z.B. umfassend eine Lichtschranke oder ein Lichtgitter, oder einen induktiven Sensor aufweisen bzw. ein optischer Sensor oder ein induktiver Sensor sein. Zusätzlich oder alternativ kann die Ermittlungseinrichtung ein Bildverarbeitungssystem, insbesondere eine Kamera, aufweisen, um bspw. die Ausdehnung der jeweiligen Transporteinheit berührungslos zu messen. Zusätzlich oder alternativ kann die Ermittlungseinrichtung einen Gewichtssensor, z.B. umfassend eine Lastzelle oder eine Waage, zur Ermittlung der Masse der jeweiligen Transporteinheit aufweisen oder ein Gewichtssensor sein. Ein derartiger Gewichtssensor kann bspw. in der Aufhängung der jeweiligen Transporteinheit integriert sein. Eine Ermittlungseinrichtung mit einem Sensor ermöglicht eine unmittelbare, insbesondere berührungslose Erfassung der Ausdehnung und/oder der Masse der Transporteinheiten. Der Einsatz von Messtechnik ermöglicht eine präzise Ermittlung der Größe und/oder der Masse der jeweiligen Transporteinheit.

Zusätzlich oder alternativ kann die Ausdehnung und/oder die Masse der jeweiligen Transporteinheit auf Basis einer an der Transporteinheit angeordneten Information, wie z.B. ein Barcode oder ein RFID-Tag, oder einer in einer Aufgabestation, in der die Transporteinheiten mit Transportgütern bestückt werden, hinterlegten Information über die Transportgüter bestimmt sein. Beispielsweise kann die Ermittlungseinrichtung als eine Auslesevorrichtung ausgebildet sein, die dazu eingerichtet ist, die Transporteinheiten charakterisierende Daten (z.B. Masseninformationen und/oder Ausdehnungsinformationen) von einem Datenträger, in welchem die die Transporteinheiten charakterisierenden Daten abgelegt sind, auszulesen. Der Datenträger kann beispielsweise ein RFID-Chip sein, der mittels der Auslesevorrichtung in Form eines Transponderlesers, insbesondere im Vorbeifahren der Transporteinheiten, ausgelesen werden kann. In dem Datenträger können beispielsweise das zu transportierende Fördergut charakterisierende Daten (z.B. eine Größe und/oder Masse des zu transportierenden Stückguts) hinterlegt sein, deren Kenntnis Rückschlüsse über die Größe und/oder die Masse der mit dem Stückgut beladenen Transporteinheit erlaubt.

Alternativ ist es auch möglich, dass die die Transporteinheiten charakterisierenden Daten nicht unmittelbar auf dem Datenträger gespeichert sind, sondern über ein Identifikationsmittel wie beispielsweise einen Barcode, einen QR-Code und/oder eine eindeutige Teilenummer des Laufwagens der jeweiligen Transporteinheit eine Identifikation des Hängeförderguts erfolgt und die jeweilige Ausdehnung und/oder Masse der Transporteinheit in der Steuereinrichtung bzw. einer Datenbank der Steuereinrichtung hinterlegt ist. Es ist dann mittels der Steuereinrichtung möglich, die Ausdehnung und/oder die Masse der jeweiligen Transporteinheit eindeutig zuzuordnen, bspw. mit Hilfe von sogenannten Umsetzungstabellen bzw. Lookup-Tabellen.

Die zumindest eine Ermittlungseinrichtung kann beispielsweise an einer Zuführstrecke und/oder an der Förderstrecke (d.h. in der Hauptförderstrecke) des Hängefördersystems angeordnet sein. Vorzugsweise ist zumindest eine Ermittlungseinrichtung an einer Zuführstrecke stromaufwärts der zumindest einen Einschleuseinrichtung angeordnet. Alternativ oder ergänzend kann zumindest eine Ermittlungseinrichtung an der Förderstrecke stromaufwärts der ersten Ausschleuseinrichtung angeordnet sein. Im Falle eines als Lastzelle ausgebildeten Gewichtssensors kann eine Ermittlungseinrichtung bspw. in dem Aufhängungssystem der jeweiligen Transporteinheit integriert sein.

Vorzugsweise erfolgt das Einstellen des ersten Abstandes zwischen den zwei aufeinanderfolgenden Transporteinheiten während des Einschleusens der Transporteinheiten auf die Förderstrecke des Hängeförderers. Alternativ kann das Einstellen des ersten Abstandes zwischen den zwei aufeinanderfolgenden Transporteinheiten zeitlich nach dem Einschleusen der Transporteinheiten auf die Förderstrecke des Hängeförderers erfolgen.

Der Schritt des Bestimmens der Größe des ersten Abstandes zwischen den zwei aufeinanderfolgenden Transporteinheiten erfolgt vorzugsweise zeitlich vor dem Schritt des Einstellens des ersten Abstandes.

Gemäß einem weiteren Beispiel wird ein Verfahren zum Betreiben eines
Hängefördersystems bereitgestellt, das eine Mehrzahl von Transporteinheiten zur Güterbeförderung, einen Hängeförderer zum Fördern der Mehrzahl von Transporteinheiten entlang einer Förderstrecke stromabwärts in einer Förderrichtung, zumindest eine Einschleuseinrichtung, und eine erste Ausschleuseinrichtung zur Ausschleusung von Transporteinheiten von der Förderstrecke, die stromabwärts der Einschleuseinrichtung in oder an der Förderstrecke angeordnet ist, aufweist, mit den folgenden Schritten:
- Einschleusen, mittels der zumindest einen Einschleuseinrichtung, der Mehrzahl von Transporteinheiten auf die Förderstrecke des Hängeförderers, wobei die Transporteinheiten nacheinander auf die Förderstrecke aufgegeben werden;
- Erstes Einstellen eines ersten Abstandes zwischen zwei aufeinanderfolgenden Transporteinheiten der Mehrzahl von Transporteinheiten, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren; und
- Bestimmen einer Größe des ersten Abstandes zwischen den zwei aufeinanderfolgenden Transporteinheiten der Mehrzahl von Transporteinheiten auf dem Hängeförderer basierend auf einer, insbesondere körperlichen, Ausdehnung und/oder einer Masse der stromabwärtigen Transporteinheit und/oder der stromaufwärtigen Transporteinheit der zwei aufeinanderfolgenden Transporteinheiten

Gemäß einem Beispiel wird ein computerimplementiertes Verfahren zum Betreiben eines Hängefördersystems bereitgestellt, das eine Mehrzahl von Transporteinheiten zur Güterbeförderung, einen Hängeförderer zum Fördern der Mehrzahl von Transporteinheiten entlang einer Förderstrecke stromabwärts in einer Förderrichtung, zumindest eine Einschleuseinrichtung, und eine erste Ausschleuseinrichtung zur Ausschleusung von Transporteinheiten von der Förderstrecke, die stromabwärts der Einschleuseinrichtung in oder an der Förderstrecke angeordnet ist, aufweist, mit den folgenden Schritten:
- Erstes Steuern der zumindest einen Einschleuseinrichtung, um die Mehrzahl von Transporteinheiten nacheinander auf die Förderstrecke des Hängeförderers einzuschleusen;
- Zweites Steuern des Hängeförderers und/oder der zumindest einen Einschleuseinrichtung und/oder der Mehrzahl von Transporteinheiten, um einen ersten Abstand zwischen zwei aufeinanderfolgenden Transporteinheiten der Mehrzahl von Transporteinheiten einzustellen, wenn eine stromabwärtige Transporteinheit der zwei aufeinanderfolgenden Transporteinheiten dazu bestimmt ist, über die erste Ausschleuseinrichtung ausgeschleust zu werden, und eine stromaufwärtige Transporteinheit der zwei aufeinanderfolgenden Transporteinheiten dazu bestimmt ist, die erste Ausschleuseinrichtung entlang der Förderstrecke zu passieren;
- Bestimmen einer Größe des ersten Abstandes zwischen den zwei aufeinanderfolgenden Transporteinheiten der Mehrzahl von Transporteinheiten auf dem Hängeförderer basierend auf einer, insbesondere körperlichen, Ausdehnung und/oder einer Masse der stromabwärtigen Transporteinheit und/oder der stromaufwärtigen Transporteinheit der zwei aufeinanderfolgenden Transporteinheiten.

Gemäß einem weiteren Beispiel wird ein, insbesondere nicht-flüchtiges, Computerprogrammprodukt bereitgestellt, umfassend Befehle, die bei der Ausführung des Programms durch einen Computer oder durch ein Hängefördersystem diesen bzw. dieses dazu veranlassen, das computerimplementierte Verfahren gemäß dem fünften oder sechsten Aspekt oder einer seiner Ausgestaltungen auszuführen.

Unter einem "nicht-flüchtigen" Computerprogrammprodukt sind vorliegend verschiedene Datenspeicher zu verstehen, deren gespeicherte Informationen auf Dauer erhalten bleiben, auch wenn beispielsweise der Computer nicht in Betrieb ist oder nicht mit Strom versorgt wird. Derartige nicht-flüchtige Datenspeicher können beispielsweise als Halbleiterspeicher ausgeführt sein, können jedoch auch als magnetische Datenspeicher wie z.B. Festplatten und Disketten oder als optische Datenspeicher wie z.B. CDs und DVDs ausgeführt sein. Das Computerprogrammprodukt kann beispielsweise durch einen Computer bzw. durch ein computerähnliches Medium (z.B. Laptop, Smartphone, Tablet oder dergleichen) ausgeführt werden.

In einer Ausgestaltung des ersten Aspekts oder einer seiner Ausgestaltungen ist die Steuereinrichtung dazu eingerichtet, wahlweise den ersten Abstand oder den zweiten Abstand einzustellen.

Mit anderen Worten, es wird wahlweise ein vergrößerter oder ein verringerter Abstand zwischen den zwei aufeinanderfolgenden Transporteinheiten der Mehrzahl von Transporteinheiten eingestellt, je nachdem, ob nur die vorauseilende Transporteinheit der zwei aufeinanderfolgenden Transporteinheiten oder nur die nachfolgende Transporteinheit der zwei aufeinanderfolgenden Transporteinheiten über die erste Ausschleuseinrichtung ausgeschleust werden soll.

In einer weiteren Ausgestaltung des ersten Aspekts oder einer seiner Ausgestaltungen ist die Steuereinrichtung des Weiteren dazu eingerichtet, eine Größe des ersten Abstandes zwischen den zwei aufeinanderfolgenden Transporteinheiten der Mehrzahl von Transporteinheiten auf dem Hängeförderer basierend auf einer, insbesondere körperlichen, Ausdehnung, und/oder einer Masse der stromabwärtigen Transporteinheit der zwei aufeinanderfolgenden Transporteinheiten und/oder der stromaufwärtigen Transporteinheit der zwei aufeinanderfolgenden Transporteinheiten zu bestimmen.

Erfindungsgemäß ist erkannt worden, dass eine massenabhängige und/oder größenabhängige Abstandssteuerung bzw. Abstandseinstellung in Fällen, in denen die stromabwärtige, vorauseilende Transporteinheit der zwei aufeinanderfolgenden Transporteinheiten über die erste Ausschleuseinrichtung von der Förderstrecke ausgeschleust werden soll, die nachfolgende Transporteinheit der zwei aufeinanderfolgenden Transporteinheiten hingegen an der ersten Ausschleuseinrichtung vorbeigefördert werden soll, ohne über die erste Ausschleuseinrichtung ausgeschleust zu werden, besonders zur Reduzierung des Kollisionsrisikos in Ausschleusbereichen beitragen kann. Dieser Erkenntnis liegt einerseits zugrunde, dass die stromabwärtige, über die erste Ausschleuseinrichtung auszuschleusende Transporteinheit der zwei aufeinanderfolgenden Transporteinheiten während des Ausschleusens eine umso größere Verzögerung in Richtung der (geraden) Förderstrecke erfährt, je größer die Masse der stromabwärtigen Transporteinheit und/oder die Größe der stromabwärtigen Transporteinheit ist. Zum anderen liegt dieser Erkenntnis zugrunde, dass die stromaufwärtige, nachfolgende Transporteinheit der zwei aufeinanderfolgenden Transporteinheiten, welche die erste Ausschleuseinrichtung passiert, der stromabwärtigen, an der ersten Ausschleuseinrichtung auszuschleusenden Transporteinheit aufgrund der Verzögerung der auszuschleusenden Transporteinheit in Richtung der (geraden) Förderstrecke im Ausschleusbereich näher kommt. Ist nun zumindest eine Transporteinheit der zwei aufeinanderfolgenden Transporteinheiten der Mehrzahl von Transporteinheiten besonders groß oder sperrig, steigt das Risiko einer Kollision zwischen den zwei aufeinanderfolgenden Transporteinheiten erheblich.

Erfindungsgemäß ist daher vorgesehen, eine Größe (d.h. einen Betrag) des ersten Abstandes zwischen den zwei aufeinanderfolgenden Transporteinheiten der Mehrzahl von Transporteinheiten auf dem Hängeförderer basierend auf einer, insbesondere körperlichen oder räumlich-körperlichen, Ausdehnung zumindest einer der stromabwärtigen Transporteinheit oder der stromaufwärtigen Transporteinheit der zwei aufeinanderfolgenden Transporteinheiten und/oder basierend auf einer Masse zumindest einer der stromabwärtigen Transporteinheit oder der stromaufwärtigen Transporteinheit der zwei aufeinanderfolgenden Transporteinheiten einzustellen.

Unter der Ausdehnung einer Transporteinheit wird vorliegend eine, insbesondere körperlich-räumliche oder strukturelle, Charakteristik (z.B. eine Abmessung oder Größe) der Transporteinheit verstanden. Die Ausdehnung einer Transporteinheit kann bspw. eine Tiefe bzw. Dicke der Transporteinheit in Förderrichtung und/oder eine Breite der Transporteinheit quer zur Förderrichtung und/oder eine Höhe der Transporteinheit und/oder ein Volumen der Transporteinheit oder eine andere geometrische Dimension umfassen. Mit anderen Worten kann die Ausdehnung einer Transporteinheit bspw. zumindest eines von einer Tiefe, einer Breite, einer Höhe, einem Volumen oder einer anderen geometrischen Dimension der Transporteinheit umfassen.

In einer Ausgestaltung weisen die Transporteinheiten jeweils eine Aufnahmeeinheit auf, wobei die Ausdehnung der Transporteinheiten durch die Ausdehnung der Aufnahmeeinheiten, insbesondere im mit einem oder mehreren Fördergütern beladenen Zustand, bestimmt ist. Die Aufnahmeeinheiten können bspw. Taschen, Behälter, Körbe, Schachteln, Transportträger, Kleiderbügel o.ä. sein oder als solche ausgebildet sein. Die Ausdehnung der jeweiligen Transporteinheit kann jedoch zumindest teilweise auch durch das Fördergut selbst bestimmt sein, bspw. wenn das Fördergut relativ zu der Aufnahmeeinrichtung hervorsteht.

Ist die Aufnahmeeinheit bspw. als Hängefördertasche ausgebildet, kann die Ausdehnung der Transporteinheit z.B. eine Dicke und/oder eine Breite und/oder eine Höhe und/oder ein Volumen der Hängefördertasche, insbesondere im mit einem oder mehreren Fördergütern beladenen Zustand, umfassen.

Die Masse der jeweiligen Transporteinheit kann die Masse eines oder mehrerer zu transportierender bzw. in einer Aufnahmeeinheit der Transporteinheit aufgenommener Fördergüter umfassen.

In einer Ausgestaltung des ersten Aspekts oder des ersten Beispiels oder einer seiner Ausgestaltungen ist die Steuereinrichtung dazu eingerichtet, die Größe des ersten Abstandes entsprechend einer ersten Abstandsgröße zu bestimmen:
- wenn die Ausdehnung der stromabwärtigen Transporteinheit der zwei aufeinanderfolgenden Transporteinheiten einen ersten Ausdehnungsschwellenwert überschreitet oder die Masse der stromabwärtigen Transporteinheit der zwei aufeinanderfolgenden Transporteinheiten einen ersten Massenschwellenwert überschreitet oder
- wenn die Ausdehnung der stromaufwärtigen Transporteinheit der zwei aufeinanderfolgenden Transporteinheiten den ersten Ausdehnungsschwellenwert überschreitet und die Ausdehnung der stromabwärtigen Transporteinheit der zwei aufeinanderfolgenden Transporteinheiten einen zweiten Ausdehnungsschwellenwert, der kleiner als der erste Ausdehnungsschwellenwert ist, überschreitet.

Erfindungsgemäß ist erkannt worden, dass bei großen (z.B. voluminösen, dicken, o.ä.) Transporteinheiten und/oder schweren Transporteinheiten, bspw. hervorgerufen durch die Beladung mit voluminösen und/oder schweren Fördergütern, zusätzliche Bedingungen zu definieren sind, um eine störungsfreie Ausschleusung und einen effizienten Förderbetrieb zu ermöglichen. Beispielsweise verhält sich eine große und/oder schwere Transporteinheit an der Ausschleusung träger und beeinflusst eine nachfolgende, nicht für diese Ausschleusung vorgesehene Transporteinheit stärker als eine kleinere und/oder leichtere Transporteinheit. Daher wird in Fällen, in denen die Ausdehnung der vorauseilenden der zwei aufeinanderfolgenden Transporteinheiten einen ersten Ausdehnungsschwellenwert überschreitet, die Größe des ersten Abstands entsprechend einer ersten Abstandsgröße, die vorzugsweise einem vergrößerten Abstand entspricht, bestimmt. Zusätzlich oder alternativ wird in Fällen, in denen die Größe der vorauseilenden der zwei aufeinanderfolgenden Transporteinheiten einen ersten Massenschwellenwert überschreitet, die Größe des ersten Abstands entsprechend der ersten Abstandsgröße, die vorzugsweise einem vergrößerten Abstand entspricht, bestimmt. Unter einem vergrößerten Abstand wird ein Abstand verstanden, der betragsmäßig größer als ein Standardtransportabstand ist, wobei der Standardtransportabstand betragsmäßig größer als der zweite Abstand ist. Der vergrößerte Abstand kann bspw. dem 1,5-fachen des Standardtransportabstands entsprechen. Mit anderen Worten entspricht die erste Abstandsgröße einem vergrößerten Abstand.

Erfindungsgemäß ist zudem erkannt worden, dass in Fällen, in denen die stromaufwärtige Transporteinheit groß oder sperrig ausgebildet ist und die stromabwärtige Transporteinheit vergleichsweise klein ausgebildet ist, jedoch eine definierte Mindestausdehnung bzw. Mindestgröße übertrifft, ebenfalls ein signifikantes Kollisionsrisiko an der Ausschleusung besteht, wenn die stromabwärtige Transporteinheit an der ersten Ausschleuseinrichtung ausgeschleust werden soll und die stromaufwärtige Transporteinheit diese passieren soll. Hintergrund ist, dass die Transporteinheiten sich in diesen Fällen bereits auf dem Hängeförderer räumlich näherstehen als bspw. in Fällen, in denen die stromabwärtige Transporteinheit besonders dünn ausgebildet ist. Daher wird in Fällen, in denen die Ausdehnung der stromaufwärtigen Transporteinheit der zwei aufeinanderfolgenden Transporteinheiten den ersten Ausdehnungsschwellenwert überschreitet und die Größe der stromabwärtigen Transporteinheit der zwei aufeinanderfolgenden Transporteinheiten einen zweiten Ausdehnungsschwellenwert, der kleiner als der erste Ausdehnungsschwellenwert ist, überschreitet, die Größe des ersten Abstands entsprechend der ersten Abstandsgröße bestimmt, d.h. ein vergrößerter Abstand gewählt.

Der Ausdehnungsschwellenwert und der Massenschwellenwert definieren demnach jeweils, insbesondere vorgegebene bzw. vordefinierte, Grenzwerte.

Ein Vorteil dieser Ausgestaltung besteht in einer effizienten und sichereren Abstandssteuerung.

In einer weiteren Ausgestaltung des ersten Aspekts oder des ersten Beispiels oder einer seiner Ausgestaltungen ist die Steuereinrichtung dazu eingerichtet, die Größe des ersten Abstandes entsprechend einer zweiten Abstandsgröße zu bestimmen, die kleiner als die erste Abstandgröße ist,
- wenn die Ausdehnung der stromabwärtigen Transporteinheit der zwei aufeinanderfolgenden Transporteinheiten den ersten Ausdehnungsschwellenwert nicht überschreitet oder die Masse der stromabwärtigen Transporteinheit der zwei aufeinanderfolgenden Transporteinheiten den ersten Massenschwellenwert nicht überschreitet und
- wenn die Ausdehnung der stromaufwärtigen Transporteinheit der zwei aufeinanderfolgenden Transporteinheiten den ersten Ausdehnungsschwellenwert überschreitet und die Ausdehnung der stromabwärtigen Transporteinheit der zwei aufeinanderfolgenden Transporteinheiten den zweiten Ausdehnungsschwellenwert nicht überschreitet.

Erfindungsgemäß ist erkannt worden, dass bei großen (z.B. voluminösen, dicken, breiten o.ä.) Transporteinheiten und/oder schweren Transporteinheiten, bspw. hervorgerufen durch die Beladung mit voluminösen und/oder schweren Fördergütern, zusätzliche Bedingungen zu definieren sind, um eine störungsfreie Ausschleusung und einen effizienten Förderbetrieb zu ermöglichen. Beispielsweise verhält sich eine große und/oder schwere Transporteinheit an der Ausschleusung träger und beeinflusst eine nachfolgende, nicht für diese Ausschleusung vorgesehene Transporteinheit stärker als eine kleinere und/oder leichtere Transporteinheit. Erfindungsgemäß ist zudem erkannt worden, dass in Fällen, in denen die stromaufwärtige Transporteinheit groß oder sperrig ausgebildet ist und die stromabwärtige Transporteinheit vergleichsweise klein ausgebildet ist, jedoch eine definierte Mindestausdehnung bzw. Mindestgröße übertrifft, ebenfalls ein signifikantes Kollisionsrisiko an der Ausschleusung besteht, wenn die stromabwärtige Transporteinheit an der ersten Ausschleuseinrichtung ausgeschleust werden soll und die stromaufwärtige Transporteinheit diese passieren soll.

Daher ist vorgesehen, in Fällen, in denen i) die Ausdehnung der vorauseilenden, über die erste Ausschleuseinrichtung auszuschleusenden Transporteinheit den ersten Ausdehnungsschwellenwert nicht überschreitet oder die Masse der vorauseilenden, über die erste Ausschleuseinrichtung auszuschleusenden Transporteinheit den ersten Massenschwellenwert nicht überschreitet und ii) die Ausdehnung der nachfolgenden, die erste Ausschleuseinrichtung entlang der Förderstrecke zu passierenden Transporteinheit den ersten Ausdehnungsschwellenwert überschreitet und die Ausdehnung der vorauseilenden Transporteinheit den zweiten Ausdehnungsschwellenwert nicht überschreitet, die Größe des ersten Abstandes entsprechend einer gegenüber der ersten Abstandsgröße verringerten zweiten Abstandsgröße zu bestimmen bzw. zu wählen.

Auf diese Weise kann ein sicherer und effizienter Transport aufeinanderfolgender Transporteinheiten sichergestellt werden. Insbesondere ermöglicht die Bestimmung der Größe des ersten Abstandes entsprechend der ersten Abstandsgröße oder der zweiten Abstandsgröße eine zusätzliche Abstufung des ersten Abstandes. So kann die erste Abstandsgröße bspw. einem vergrößerten Abstand entsprechen und die zweite Abstandsgröße bspw. einem normalen Abstand (d.h. einem Standardtransportabstand) entsprechen. Bspw. kann die erste Abstandsgröße dem 1,5-fachen der zweiten Abstandsgröße entsprechen.

In einer weiteren Ausgestaltung des ersten Beispiels oder einer seiner Ausgestaltungen ist die Steuereinrichtung des Weiteren dazu eingerichtet, einen zweiten Abstand zwischen den zwei aufeinanderfolgenden Transporteinheiten der Mehrzahl von Transporteinheiten auf dem Hängeförderer einzustellen, wenn die stromaufwärtige Transporteinheit der zwei aufeinanderfolgenden Transporteinheiten dazu bestimmt ist, über die erste Ausschleuseinrichtung ausgeschleust zu werden, und die stromabwärtige Transporteinheit der zwei aufeinanderfolgenden Transporteinheiten dazu bestimmt ist, die erste Ausschleuseinrichtung entlang der Förderstrecke zu passieren, wobei der erste Abstand größer als der zweite Abstand ist.

Mit anderen Worten wird zwischen zwei aufeinanderfolgenden Transporteinheiten der Mehrzahl von Transporteinheiten in einem ersten Fall, in dem die vorauseilende bzw. stromabwärtige Transporteinheit der zwei aufeinanderfolgenden Transporteinheiten über die erste Ausschleuseinrichtung von der Förderstrecke ausgeschleust werden soll und die nachfolgende bzw. stromaufwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, ein größerer Abstand eingestellt als in einem zweiten Fall, in dem die vorauseilende bzw. stromabwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, und die nachfolgende bzw. stromaufwärtige Transporteinheit der zwei aufeinanderfolgenden Transporteinheiten über die erste Ausschleuseinrichtung von der Förderstrecke ausgeschleust werden soll.

In dem zweiten Fall, in dem die vorauseilende bzw. stromabwärtige Transporteinheit der zwei aufeinanderfolgenden Transporteinheiten entlang der Förderstrecke an der ersten Ausschleuseinrichtung vorbeigefördert werden soll, ohne über die erste Ausschleuseinrichtung ausgeschleust zu werden, und die nachfolgende bzw. stromaufwärtige Transporteinheit der zwei aufeinanderfolgenden Transporteinheiten über die erste Ausschleuseinrichtung von der Förderstrecke ausgeschleust werden soll, besteht ein vermindertes Kollisionsrisiko, da allenfalls die nachfolgende Transporteinheit der zwei aufeinanderfolgenden Transporteinheiten während des Ausschleusens in Richtung der (geraden) Förderstrecke verlangsamt wird, nicht jedoch die vorauseilende Transporteinheit der zwei aufeinanderfolgenden Transporteinheiten. Erfindungsgemäß wird in diesem zweiten Fall demnach ein kleinerer bzw. verringerter Abstand zwischen den zwei aufeinanderfolgenden Transporteinheiten eingestellt. Der zweite Abstand ist betragsmäßig kleiner als die erste Abstandsgröße und/oder die zweite Abstandsgröße.

In einer weiteren Ausgestaltung des ersten Aspekts oder des ersten Beispiels oder einer seiner Ausgestaltungen ist die Steuereinrichtung des Weiteren dazu eingerichtet, einen dritten Abstand zwischen den zwei aufeinanderfolgenden Transporteinheiten der Mehrzahl von Transporteinheiten auf dem Hängeförderer einzustellen, wenn die stromaufwärtige Transporteinheit und die stromabwärtige Transporteinheit der zwei aufeinanderfolgenden Transporteinheiten dazu bestimmt sind, über die erste Ausschleuseinrichtung ausgeschleust zu werden, wobei der dritte Abstand kleiner oder gleich dem zweiten Abstand ist.

Die Einstellung des dritten Abstandes erfolgt vorzugsweise während des Einschleusens der Transporteinheiten auf die Förderstrecke des Hängeförderers. Alternativ kann das Einstellen des dritten Abstandes zeitlich nach dem Einschleusen der Transporteinheiten auf die Förderstrecke des Hängeförderers erfolgen.

Mit anderen Worten wird ein dritter Abstand zwischen zwei aufeinanderfolgenden Transporteinheiten eingestellt, wenn die zwei aufeinanderfolgenden Transporteinheiten dazu bestimmt sind, über dieselbe Ausschleuseinrichtung ausgeschleust zu werden, d.h. dasselbe Ausschleusziel haben. Der dritte Abstand ist hierbei kleiner oder gleich dem zweiten Abstand. Beispielsweise kann der dritte Abstand einem verringerten bzw. reduzierten Abstand entsprechen, der kleiner als ein normaler Abstand bzw. Standarttransportabstand, jedoch größer als ein Minimalabstand, bei dem zwei aufeinanderfolgende bei der Ausschleusung, insbesondere an einer Weichenzunge, nicht mehr voneinander trennbar sind, ist. Alternativ kann der dritte Abstand dem Minimalabstand entsprechen, da die zwei aufeinanderfolgenden Transporteinheiten ohnehin über dieselbe Ausschleuseinrichtung ausgeschleust werden sollen.

Erfindungsgemäß ist erkannt worden, dass bei einer Ausschleusung von zwei aufeinanderfolgenden Transporteinheiten über dieselbe Ausschleuseinrichtung keine bzw. eine wesentlich geringere Kollisionsgefahr besteht, da beide Transporteinheiten während des Ausschleusens eine Verzögerung erfahren. Demnach ist es in diesem Fall vorgesehen, einen möglichst kleinen Abstand zwischen den zwei aufeinanderfolgenden Transporteinheiten einzustellen, um die Förder- bzw. Packungsdichte aufeinanderfolgender Transporteinheiten zu erhöhen.

Auf diese Weise kann die Packungsdichte entlang der Förderstrecke weiter erhöht werden, ohne die Sicherheit zu beeinträchtigen.

In einer weiteren Ausgestaltung des ersten Aspekts oder des ersten Beispiels oder einer seiner Ausgestaltungen ist die Steuereinrichtung dazu eingerichtet, wahlweise den ersten Abstand, den zweiten Abstand oder den dritten Abstand einzustellen.

Mit anderen Worten, es wird wahlweise ein vergrößerter oder ein verringerter Abstand zwischen den zwei aufeinanderfolgenden Transporteinheiten der Mehrzahl von Transporteinheiten eingestellt, je nachdem, ob i) nur die vorauseilende Transporteinheit der zwei aufeinanderfolgenden Transporteinheiten über die erste Ausschleuseinrichtung ausgeschleust werden soll, ii) nur die nachfolgende Transporteinheit der zwei aufeinanderfolgenden Transporteinheiten über die erste Ausschleuseinrichtung ausgeschleust werden soll oder iii) sowohl die vorauseilende Transporteinheit als auch die nachfolgende Transporteinheit der zwei aufeinanderfolgenden Transporteinheiten über die erste Ausschleuseinrichtung ausgeschleust werden soll.

In einer weiteren Ausgestaltung des ersten Aspekts oder des ersten Beispiels oder einer seiner Ausgestaltungen ist der Hängeförderer ein Taktförderer zum getakteten Fördern der Transporteinheiten mit einer Mehrzahl von Mitnehmern, welche jeweils mit einer Transporteinheit der Mehrzahl von Transporteinheiten lösbar verbindbar sind.

Im Gegensatz zu unabhängig und mit veränderlichem Abstand zueinander förderbaren Transporteinheiten sind in einem Taktförderer die Transporteinheiten als nicht unabhängig und getaktet förderbar zu verstehen. Im Zusammenhang mit der vorliegenden Erfindung ist daher unter getakteter Förderung ein Fördern von Transporteinheiten mit einem bestimmten Abstand zueinander zu verstehen, wobei der Taktförderer vorzugsweise eine Unterteilung zur festen Anordnung der Mitnehmer aufweist. Dem Fachmann ist in diesem Zusammenhang klar, dass mit "festem Abstand" Toleranzen und Verschiebungen innerhalb des Taktförderers, z.B. durch Belastungen einer Kette, mit eingeschlossen sind.

Die Mitnehmer sind vorzugsweise derart mit den Transporteinheiten lösbar verbindbar, dass zwischen bestimmten Mitnehmern, welche in Eingriff mit Transporteinheiten stehen, freie Mitnehmer ohne Transporteinheiten angeordnet sein können. Eine hohe Förderkapazität kann dabei bereitgestellt werden, indem bei der Förderung eine möglichst hohe Anzahl von Mitnehmern mit Transporteinheiten in Eingriff steht und die Anzahl von freien Mitnehmern minimiert wird. Aufgrund der in der Regel festen Unterteilung des Taktförderers, z.B. durch eine Kette, ist in der Regel die minimale Anzahl von freien Mitnehmern zwischen aufeinanderfolgenden, mit Transporteinheiten besetzten Mitnehmern im Wesentlichen durch die Ausdehnung der Transporteinheiten, z.B. durch eine Tiefe in Förderrichtung, und/oder durch eine Weichenschaltzeit, insbesondere bei der Einschleusung und/oder bei der Ausschleusung, bestimmt.

In einer weiteren Ausgestaltung des ersten Aspekts oder des ersten Beispiels oder einer seiner Ausgestaltungen weist jede Transporteinheit der Mehrzahl von Transporteinheiten eine Aufnahmeeinheit und einen Laufwagen auf, an welchem die Aufnahmeeinheit befestigt oder befestigbar ist, wobei die Laufwagen mit den Mitnehmern des Taktförderers in Eingriff bringbar sind.

Die Aufnahmeeinheiten können bspw. Taschen, Behälter, Körbe, Schachteln, Transportträger, Kleiderbügel o.ä. sein oder als solche ausgebildet sein.

Der Taktförderer kann bspw. eine Förderkette umfassen, die mit ihren Kettengliedern in oder an einer Schiene geführt ist. Parallel zu der Schiene der Förderkette kann eine Laufschiene gehalten sein, in der einzelne Laufwagen beweglich gelagert sind. Die Kettenglieder der Förderkette können bspw. über hervorstehende Mitnehmer und einen Stift am Laufwagen in Eingriff mit dem Laufwagen gebracht werden, so dass eine fördernde Bewegung der Förderkette eine entsprechende Bewegung der in Eingriff stehenden Laufwagen bewirkt.

An jedem Laufwagen kann bspw. ein Verbindungselement vorgesehen sein, mittels dessen eine Aufnahmeeinheit, wie z.B. eine Tasche, am Laufwagen hängend befestigt werden kann.

In einer weiteren Ausgestaltung des ersten Aspekts oder des ersten Beispiels oder einer seiner Ausgestaltungen weisen die Mitnehmer eine, insbesondere konstante, Teilung auf, wobei der Abstand zwischen den zwei aufeinanderfolgenden Transporteinheiten einem ganzzahligen Vielfachen der Teilung entspricht.

Mit anderen Worten kann der Abstand zwischen zwei aufeinanderfolgenden Transporteinheiten der Mehrzahl von Transporteinheiten durch entsprechende Besetzung der Mitnehmer mit Transporteinheiten eingestellt werden. Eine hohe Förderkapazität kann dabei bereitgestellt werden, indem bei der Förderung eine möglichst hohe Anzahl von Mitnehmern mit Transporteinheiten in Eingriff steht und die Anzahl von freien Mitnehmern minimiert wird. Ein vergrößerter Abstand zwischen zwei aufeinanderfolgenden Transporteinheiten kann bewirkt werden, indem bei der Förderung bspw. die Anzahl von freien Mitnehmern zwischen den aufeinanderfolgenden Transporteinheiten erhöht wird.

In einer Ausgestaltung des zweiten Aspekts oder einer seiner Ausgestaltungen wird eine Größe des ersten Abstandes zwischen den zwei aufeinanderfolgenden Transporteinheiten der Mehrzahl von Transporteinheiten auf dem Hängeförderer basierend auf einer Ausdehnung und/oder einer Masse der stromabwärtigen Transporteinheit und/oder der stromaufwärtigen Transporteinheit der zwei aufeinanderfolgenden Transporteinheiten bestimmt, insbesondere computergestützt bestimmt.

Erfindungsgemäß ist erkannt worden, dass eine massenabhängige und/oder größenabhängige Abstandssteuerung bzw. Abstandseinstellung in Fällen, in denen die stromabwärtige, vorauseilende Transporteinheit der zwei aufeinanderfolgenden Transporteinheiten über die erste Ausschleuseinrichtung von der Förderstrecke ausgeschleust werden soll, die nachfolgende Transporteinheit der zwei aufeinanderfolgenden Transporteinheiten hingegen an der ersten Ausschleuseinrichtung vorbeigefördert werden soll, ohne über die erste Ausschleuseinrichtung ausgeschleust zu werden, besonders zur Reduzierung des Kollisionsrisikos in Ausschleusbereichen beitragen kann. Dieser Erkenntnis liegt einerseits zugrunde, dass die stromabwärtige, über die erste Ausschleuseinrichtung auszuschleusende Transporteinheit der zwei aufeinanderfolgenden Transporteinheiten während des Ausschleusens eine umso größere Verzögerung erfährt, je größer die Masse, bzw. die träge Masse, der stromabwärtigen Transporteinheit und/oder die Größe der stromabwärtigen Transporteinheit ist. Zum anderen liegt dieser Erkenntnis zugrunde, dass die stromaufwärtige, nachfolgende Transporteinheit der zwei aufeinanderfolgenden Transporteinheiten, welche die erste Ausschleuseinrichtung passiert, der stromabwärtigen, an der ersten Ausschleuseinrichtung auszuschleusenden Transporteinheit aufgrund der Verzögerung in Richtung der (geraden) Förderstrecke der auszuschleusenden Transporteinheit im Ausschleusbereich näher kommt. Ist nun zumindest eine Transporteinheit der zwei aufeinanderfolgenden Transporteinheiten der Mehrzahl von Transporteinheiten besonders groß oder sperrig, steigt das Risiko einer Kollision zwischen den zwei aufeinanderfolgenden Transporteinheiten erheblich.

Daher ist vorgesehen, eine Größe (d.h. einen Betrag) des ersten Abstandes zwischen den zwei aufeinanderfolgenden Transporteinheiten der Mehrzahl von Transporteinheiten auf dem Hängeförderer basierend auf einer, insbesondere körperlichen oder räumlich-körperlichen, Ausdehnung zumindest einer der stromabwärtigen Transporteinheit oder der stromaufwärtigen Transporteinheit der zwei aufeinanderfolgenden Transporteinheiten und/oder basierend auf einer Masse zumindest einer der stromabwärtigen Transporteinheit oder der stromaufwärtigen Transporteinheit der zwei aufeinanderfolgenden Transporteinheiten einzustellen.

In einer Ausgestaltung des zweiten Aspekts oder des zweiten Beispiels oder einer seiner Ausgestaltungen wird die Größe des ersten Abstandes entsprechend einer ersten Abstandsgröße bestimmt:
- wenn die Ausdehnung der stromabwärtigen Transporteinheit einen ersten Ausdehnungsschwellenwert überschreitet oder die Masse der stromabwärtigen Transporteinheit einen ersten Massenschwellenwert überschreitet oder
- wenn die Ausdehnung der stromaufwärtigen Transporteinheit den ersten Ausdehnungsschwellenwert überschreitet und die Ausdehnung der stromabwärtigen Transporteinheit einen zweiten Ausdehnungsschwellenwert, der kleiner als der erste Ausdehnungsschwellenwert ist, überschreitet.

Erfindungsgemäß ist erkannt worden, dass bei großen (z.B. voluminösen, dicken, o.ä.) Transporteinheiten und/oder schweren Transporteinheiten, bspw. hervorgerufen durch die Beladung mit voluminösen und/oder schweren Fördergütern, zusätzliche Bedingungen zu definieren sind, um eine störungsfreie Ausschleusung und einen effizienten Förderbetrieb zu ermöglichen. Beispielsweise verhält sich eine große und/oder schwere Transporteinheit an der Ausschleusung träger und beeinflusst eine nachfolgende, nicht für diese Ausschleusung vorgesehene Transporteinheit stärker als eine kleinere und/oder leichtere Transporteinheit. Daher wird in Fällen, in denen die Ausdehnung der vorauseilenden der zwei aufeinanderfolgenden Transporteinheiten einen ersten Ausdehnungsschwellenwert überschreitet, die Größe des ersten Abstands entsprechend einer ersten Abstandsgröße, die vorzugsweise einem vergrößerten Abstand entspricht, bestimmt. Zusätzlich oder alternativ wird in Fällen, in denen die Größe der vorauseilenden der zwei aufeinanderfolgenden Transporteinheiten einen ersten Massenschwellenwert überschreitet, die Größe des ersten Abstands entsprechend der ersten Abstandsgröße, die vorzugsweise einem vergrößerten Abstand entspricht, bestimmt. Unter einem vergrößerten Abstand wird ein Abstand verstanden, der betragsmäßig größer als ein Standardtransportabstand ist, wobei der Standardtransportabstand betragsmäßig größer als der zweite Abstand ist. Der vergrößerte Abstand kann bspw. dem 1,5-fachen des Standardtransportabstands entsprechen. Mit anderen Worten entspricht die erste Abstandsgröße einem vergrößerten Abstand.

Erfindungsgemäß ist zudem erkannt worden, dass in Fällen, in denen die stromaufwärtige Transporteinheit groß oder sperrig ausgebildet ist und die stromabwärtige Transporteinheit vergleichsweise klein ausgebildet ist, jedoch eine definierte Mindestausdehnung bzw. Mindestgröße übertrifft, ebenfalls ein signifikantes Kollisionsrisiko an der Ausschleusung besteht, wenn die stromabwärtige Transporteinheit an der ersten Ausschleuseinrichtung ausgeschleust werden soll und die stromaufwärtige Transporteinheit diese passieren soll. Hintergrund ist, dass die Transporteinheiten sich in diesen Fällen bereits auf dem Hängeförderer räumlich näherstehen als bspw. in Fällen, in denen die stromabwärtige Transporteinheit besonders dünn ausgebildet ist. Daher wird in Fällen, in denen die Ausdehnung der stromaufwärtigen Transporteinheit der zwei aufeinanderfolgenden Transporteinheiten den ersten Ausdehnungsschwellenwert überschreitet und die Größe der stromabwärtigen Transporteinheit der zwei aufeinanderfolgenden Transporteinheiten einen zweiten Ausdehnungsschwellenwert, der kleiner als der erste Ausdehnungsschwellenwert ist, überschreitet, die Größe des ersten Abstands entsprechend der ersten Abstandsgröße bestimmt, d.h. ein vergrößerter Abstand gewählt.

In einer weiteren Ausgestaltung des zweiten Aspekts oder des zweiten Beispiels oder einer seiner Ausgestaltungen wird die Größe des ersten Abstandes entsprechend einer zweiten Abstandsgröße bestimmt, die kleiner als die erste Abstandgröße ist,
- wenn die Ausdehnung der stromabwärtigen Transporteinheit den ersten Ausdehnungsschwellenwert nicht überschreitet oder die Masse der stromabwärtigen Transporteinheit den ersten Massenschwellenwert nicht überschreitet und
- wenn die Ausdehnung der stromaufwärtigen Transporteinheit den ersten Ausdehnungsschwellenwert überschreitet und die Ausdehnung der stromabwärtigen Transporteinheit den zweiten Ausdehnungsschwellenwert nicht überschreitet.

Mit anderen Worten ist es vorgesehen, in Fällen, in denen i) die Ausdehnung der vorauseilenden, über die erste Ausschleuseinrichtung auszuschleusenden Transporteinheit den ersten Ausdehnungsschwellenwert nicht überschreitet oder die Masse der vorauseilenden, über die erste Ausschleuseinrichtung auszuschleusenden Transporteinheit den ersten Massenschwellenwert nicht überschreitet und ii) die Ausdehnung der nachfolgenden, die erste Ausschleuseinrichtung entlang der Förderstrecke zu passierenden Transporteinheit den ersten Ausdehnungsschwellenwert überschreitet und die Ausdehnung der vorauseilenden Transporteinheit den zweiten Ausdehnungsschwellenwert nicht überschreitet, die Größe des ersten Abstandes entsprechend einer gegenüber der ersten Abstandsgröße verringerten zweiten Abstandsgröße zu bestimmen bzw. zu wählen.

Die jeweiligen Transporteinheiten können bspw. anhand ihrer Ausdehnung und/oder ihrer Masse klassifiziert sein. Bspw. kann die Klassifizierung der Ausdehnung eine Unterteilung in die (ersten) Kategorien "unbeladen", "klein", "normal" und "groß" umfassen. Jeder Kategorie kann ein entsprechender Ausdehnungswertebereich zugewiesen sein. Beispielsweise kann der Kategorie "unbeladen" ein erster Ausdehnungswertebereich (z.B. [0 mm; 20 mm]), der Kategorie "klein" ein zweiter Ausdehnungsbereich (z.B. (20 mm; 50mm]), der Kategorie "normal" ein dritter Ausdehnungsbereich (z.B. (50 mm; 99 mm]) und der Kategorie "groß" ein vierter Ausdehnungswertebereich (z.B. (100 mm; 150 mm]) zugewiesen sein. Die Kategorien können bspw. in einer Datenbank eines Speichermediums, insbesondere in einer Umsetzungstabelle, hinterlegt sein. Der erste Ausdehnungsschwellenwert kann bspw. einer Obergrenze des dritten Ausdehnungswertebereichs entsprechen. Der zweite Ausdehnungsschwellenwert kann bspw. einer Obergrenze des zweiten Ausdehnungswertebereichs entsprechen.

Alternativ oder zusätzlich kann die Klassifizierung der Masse eine Unterteilung in die (zweiten) Kategorien "unbeladen", "leicht", "normal" und "schwer" umfassen. Jeder Kategorie kann ein entsprechender Massenwertebereich zugewiesen sein. Beispielsweise kann der Kategorie "unbeladen" ein erster Massenwertebereich (z.B. [0 g; 0 g]), der Kategorie "leicht" ein zweiter Massenwertebereich (z.B. (0 g; 500 g]), der Kategorie "normal" ein dritter Massenwertebereich (z.B. (500 g; 999 g]) und der Kategorie "schwer" ein vierter Massenwertebereich (z.B. (1000 g; 2500 g]) zugewiesen sein. Die Kategorien können bspw. in einer Datenbank eines Speichermediums, insbesondere in einer Umsetzungstabelle, hinterlegt sein. Der erste Massenschwellenwert kann bspw. einer Obergrenze des dritten Massenwertebereichs entsprechen.

Jeder Kategorie kann eine Abstandsgröße für die Abstandseinstellung zwischen zwei aufeinanderfolgenden Transporteinheiten zugewiesen sein. Die Abstandsgrößen können bspw. in die (dritten) Kategorien "Minimalabstand", "verringerter Abstand", "normaler Abstand" und "vergrößerter Abstand" unterteilt und den jeweiligen (ersten) Kategorien "unbeladen", "klein", "normal" und "groß" und/oder den jeweiligen (zweiten) Kategorien "unbeladen", "leicht", "normal" und "schwer" zugeordnet sein. Beispielsweise kann der erste Ausdehnungswertebereich der Abstandsgröße "Minimalabstand", der zweite Ausdehnungswertebereich der Abstandsgröße "verringerter Abstand", der dritte Ausdehnungswertebereich der Abstandsgröße "normaler Abstand" und der vierte Ausdehnungswertebereich der Abstandsgröße "vergrößerter Abstand" zugeordnet sein. Alternativ oder zusätzlich kann der erste Massenwertebereich der Abstandsgröße "Minimalabstand", der zweite Massenwertebereich der Abstandsgröße "verringerter Abstand", der dritte Massenwertebereich der Abstandsgröße "normaler Abstand" und der vierte Massenwertebereich der Abstandsgröße "vergrößerter Abstand" zugeordnet sein.

Vorzugsweise entspricht die erste Abstandsgröße dem vergrößerten Abstand, die zweite Abstandsgröße dem normalen Abstand, der zweite Abstand dem reduzierten Abstand und der dritte Abstand dem reduzierten Abstand oder dem Minimalabstand.

Wird, bspw. mittels der Steuereinrichtung oder einer Auswerteeinheit der Steuereinrichtung festgestellt, dass die Ausdehnung der stromabwärtigen Transporteinheit der zwei aufeinanderfolgenden Transporteinheiten in den der Kategorie "groß" entsprechenden vierten Ausdehnungswertebereich fällt, d.h. mit anderen Worten den ersten Ausdehnungsschwellenwert überschreitet, wird der erste Abstand zwischen den zwei aufeinanderfolgenden Transporteinheiten entsprechend dem "vergrößerten Abstand" bestimmt. Der "vergrößerte Abstand" entspricht in diesem Beispiel der ersten Abstandsgröße.

Wird, bspw. mittels der Steuereinrichtung oder einer Auswerteeinheit der Steuereinrichtung, festgestellt, dass die Masse der stromabwärtigen Transporteinheit der zwei aufeinanderfolgenden Transporteinheiten in den der Kategorie "schwer" entsprechenden vierten Massenwertebereich fällt, d.h. mit anderen Worten den ersten Massenschwellenwert überschreit, wird der erste Abstand zwischen den zwei aufeinanderfolgenden Transporteinheiten entsprechend dem "vergrößerten Abstand" bestimmt. Der "vergrößerte Abstand" entspricht in diesem Beispiel der ersten Abstandsgröße.

Wird, bspw. mittels der Steuereinrichtung oder einer Auswerteeinheit der Steuereinrichtung, festgestellt, dass die Ausdehnung der stromaufwärtigen Transporteinheit der zwei aufeinanderfolgenden Transporteinheiten in den der Kategorie "groß" entsprechenden vierten Ausdehnungswertebereich fällt, d.h. mit anderen Worten den ersten Ausdehnungsschwellenwert überschreit, und dass die Ausdehnung der stromabwärtigen Transporteinheit der zwei aufeinanderfolgenden Transporteinheiten in den der Kategorie "normal" entsprechenden dritten Ausdehnungswertebereich fällt, d.h. mit anderen Worten den zweiten Ausdehnungsschwellenwert überschreit, wird der erste Abstand zwischen den zwei aufeinanderfolgenden Transporteinheiten entsprechend dem "vergrößerten Abstand" bestimmt. Der "vergrößerte Abstand" entspricht in diesem Beispiel der ersten Abstandsgröße.

Wird, bspw. mittels der Steuereinrichtung oder der Auswerteeinheit der Steuereinrichtung, festgestellt, dass i) die Ausdehnung der stromabwärtigen Transporteinheit der zwei aufeinanderfolgenden Transporteinheiten nicht in den der Kategorie "groß" entsprechenden vierten Ausdehnungswertebereich fällt oder ii) die Masse der stromabwärtigen Transporteinheit der zwei aufeinanderfolgenden Transporteinheiten nicht in den der Kategorie "schwer" entsprechenden dritten Massenwertebereich fällt und iii) die Ausdehnung der stromaufwärtigen Transporteinheit der zwei aufeinanderfolgenden Transporteinheiten in den der Kategorie "groß" entsprechenden vierten Ausdehnungswertebereich fällt, d.h. mit anderen Worten den ersten Ausdehnungsschwellenwert überschreit, und die Ausdehnung der stromabwärtigen Transporteinheit der zwei aufeinanderfolgenden Transporteinheiten den zweiten Ausdehnungsschwellenwert nicht überschreitet, d.h. mit anderen Worten in den der Kategorie "klein" oder der Kategorie "unbeladen" entsprechenden ersten oder zweiten Ausdehnungswertebereich fällt, wird der erste Abstand zwischen den zwei aufeinanderfolgenden Transporteinheiten entsprechend dem "normalen Abstand", der auch als "Standardtransportabstand" bezeichnet werden kann, bestimmt.

Hierbei gilt vorzugsweise folgender Zusammenhang in Bezug auf die zu bestimmenden bzw. einzustellenden Abstände zwischen zwei aufeinanderfolgenden Transporteinheiten: "Minimalabstand" < "verringerter Abstand" < "normaler Abstand" < "vergrößerter Abstand". Des Weiteren gilt vorzugsweise folgender Zusammenhang in Bezug auf die Ausdehnung einer Transporteinheit: "unbeladen" < "klein" < "normal" < "groß". Des Weiteren gilt vorzugsweise folgender Zusammenhang in Bezug auf die Masse einer Transporteinheit: "unbeladen" < "leicht" < "normal" < "schwer".

Die angegebenen Ausdehnungswertebereiche und/ Massenwertebereiche sind lediglich als Beispiele zu verstehen. Darüber hinaus versteht es sich, dass die erste Kategorie und/oder die zweite Kategorie auch weniger Kategorien, bspw. im Falle der ersten Kategorie lediglich die Kategorien "klein", "normal" und im Falle der zweiten Kategorie lediglich die Kategorien "groß" bzw. "klein", "normal" und "schwer" aufweisen kann.

Auf diese Weise kann ein sicherer und effizienter Transport aufeinanderfolgender Transporteinheiten sichergestellt werden. Insbesondere ermöglicht die Bestimmung der Größe des ersten Abstandes entsprechend der ersten Abstandsgröße oder der zweiten Abstandsgröße eine zusätzliche Abstufung des ersten Abstandes. So kann die erste Abstandsgröße bspw. einem vergrößerten Abstand entsprechen und die zweite Abstandsgröße bspw. einem normalen Abstand entsprechen. Bspw. kann die erste Abstandsgröße dem 1,5-fachen der zweiten Abstandsgröße entsprechen.

In einer Ausgestaltung des dritten Aspekts oder einer seiner Ausgestaltungen wird eine Größe des ersten Abstandes zwischen den zwei aufeinanderfolgenden Transporteinheiten der Mehrzahl von Transporteinheiten auf dem Hängeförderer basierend auf einer Ausdehnung und/oder einer Masse der stromabwärtigen Transporteinheit und/oder der stromaufwärtigen Transporteinheit der zwei aufeinanderfolgenden Transporteinheiten bestimmt, insbesondere computergestützt bestimmt.

In einer Ausgestaltung des dritten Aspekts oder des dritten Beispiels oder einer seiner Ausgestaltungen wird die Größe des ersten Abstandes entsprechend einer ersten Abstandsgröße bestimmt:
- wenn die Ausdehnung der stromabwärtigen Transporteinheit einen ersten Ausdehnungsschwellenwert überschreitet oder die Masse der stromabwärtigen Transporteinheit einen ersten Massenschwellenwert überschreitet oder
- wenn die Ausdehnung der stromaufwärtigen Transporteinheit den ersten Ausdehnungsschwellenwert überschreitet und die Ausdehnung der stromabwärtigen Transporteinheit einen zweiten Ausdehnungsschwellenwert, der kleiner als der erste Ausdehnungsschwellenwert ist, überschreitet.

In einer weiteren Ausgestaltung des dritten Aspekts oder des dritten Beispiels oder einer seiner Ausgestaltungen wird die Größe des ersten Abstandes entsprechend einer zweiten Abstandsgröße bestimmt, die kleiner als die erste Abstandgröße ist,
- wenn die Ausdehnung der stromabwärtigen Transporteinheit den ersten Ausdehnungsschwellenwert nicht überschreitet oder die Masse der stromabwärtigen Transporteinheit den ersten Massenschwellenwert nicht überschreitet und
- wenn die Ausdehnung der stromaufwärtigen Transporteinheit den ersten Ausdehnungsschwellenwert überschreitet und die Ausdehnung der stromabwärtigen Transporteinheit den zweiten Ausdehnungsschwellenwert nicht überschreitet.

In einer weiteren Ausgestaltung der Aspekte oder einer seiner Ausgestaltungen umfasst oder ist die Ausdehnung eine Breite der stromabwärtigen Transporteinheit und/oder der stromaufwärtigen Transporteinheit quer zur Förderrichtung.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines Hängefördersystems;
- Fig. 2A-2C: schematische Darstellungen einer Ausführungsform des Hängefördersystems, bei der die Abstandssteuerung in Abhängigkeit eines Ausschleusungsziels erfolgt;
- Fig. 3A-3C: schematische Darstellungen einer Ausführungsform des Hängefördersystems, bei der die Abstandssteuerung in Abhängigkeit einer Masse und/oder Ausdehnung erfolgt;
- Fig. 4: ein Flussdiagramm eines Verfahrens zum Betreiben eines Hängefördersystems;
- Fig. 5: ein Flussdiagramm eines Verfahrens zum Betreiben eines Hängefördersystems;
- Fig. 6: ein Flussdiagramm eines computerimplementierten Verfahrens zum Betreiben eines Hängefördersystems; und
- Fig. 7: ein Flussdiagramm eines computerimplementierten Verfahrens zum Betreiben eines Hängefördersystems.

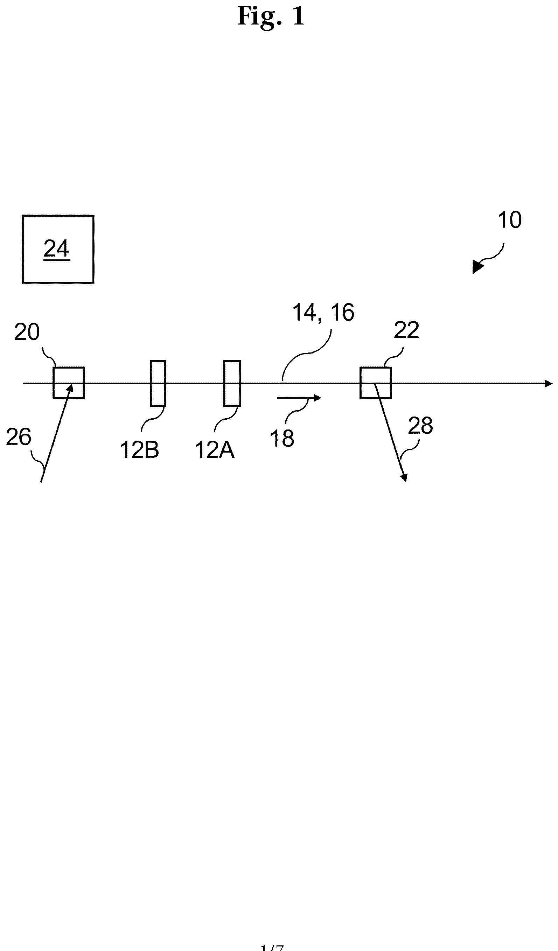

Die Fig. 1 zeigt eine schematische Darstellung einer Ausführungsform eines erfindungsgemäßen Hängefördersystems, gesamthaft durch das Bezugszeichen 10 bezeichnet. Das dargestellte Hängefördersystem 10 weist aus Gründen einer besseren Darstellbarkeit exemplarisch eine stromabwärtige Transporteinheit 12A und eine stromaufwärtige Transporteinheit 12B auf. Es versteht sich jedoch, dass die Anzahl der Transporteinheiten lediglich als Beispiel dient und nicht auf zwei beschränkt ist.

Des Weiteren weist das Hängefördersystem 10 einen Hängeförderer 14 zum Fördern der Transporteinheiten 12A, 12B entlang einer Förderstrecke 16 stromabwärts in einer Förderrichtung 18, eine Einschleuseinrichtung 20, die dazu ausgebildet oder eingerichtet ist, die Transporteinheiten 12A, 12B nacheinander auf die Förderstrecke 16 des Hängeförderers 14 einzuschleusen, eine erste Ausschleuseinrichtung 22 zum Ausschleusen von Transporteinheiten von der Förderstrecke 16, die in Förderrichtung 18 stromabwärts der Einschleuseinrichtung 20 angeordnet ist, sowie eine Steuereinrichtung 24 zur Abstandssteuerung auf.

Vorzugsweise ist die Einschleuseinrichtung 20 dazu ausgebildet oder eingerichtet, die Transporteinheiten 12A, 12B von einer Zuführstrecke 26, die vorzugsweise in die Förderstrecke 16 mündet, vereinzelt auf die Förderstrecke 16 aufzugeben oder einzuschleusen. Die Zuführstrecke 26 kann bspw. eine nicht dargestellte Führungsschiene aufweisen, mittels derer die Transporteinheiten 12A, 12B der Einschleuseinrichtung 20 zugeführt werden können.

Das Ausschleusen von Transporteinheiten von der Förderstrecke 16 erfolgt über die erste Ausschleuseinrichtung 22. Die erste Ausschleuseinrichtung 22 ist dazu ausgebildet oder eingerichtet, Transporteinheiten, z.B. zumindest eine der zwei aufeinanderfolgenden Transporteinheiten 12A, 12B, von der Förderstrecke 16 auszuschleusen, insbesondere durch Überführen der Transporteinheit 12A und/oder der Transporteinheit 12B auf eine Ausschleusstrecke 28. Die Ausschleusstrecke 28 zweigt vorzugsweise von der Förderstrecke 16 ab. Die Ausschleusstrecke 28 kann bspw. eine nicht dargestellte Führungsschiene aufweisen.

Die erste Ausschleuseinrichtung 22 kann bspw. eine Weiche sein oder als Weiche ausgebildet sein.

Optional kann das Hängefördersystem 10 eine nicht dargestellte zweite Ausschleuseinrichtung aufweisen, die vorzugsweise stromabwärts der ersten Ausschleuseinrichtung 22 in oder an der Förderstrecke 16 des Hängeförderers 14 angeordnet ist. Die zweite Ausschleuseinrichtung ist vorzugsweise dazu ausgebildet oder eingerichtet, Transporteinheiten, welche die erste Ausschleuseinrichtung 22 entlang der Förderstrecke 16 passieren sollen, auszuschleusen. Alternativ kann die zweite Ausschleuseinrichtung stromabwärts der Einschleuseinrichtung 20 und stromaufwärts der ersten Ausschleuseinrichtung 22 angeordnet sein.

Obwohl in der Fig. 1 lediglich eine Einschleuseinrichtung 20 dargestellt ist, kann das Hängefördersystem 10 auch mehrere Einschleuseinrichtungen 20 aufweisen. Diese können beispielsweise entlang der Förderstrecke 16 des Hängeförderers 14 stromabwärts in der Förderrichtung 18 voneinander beabstandet sein.

Die Steuereinrichtung 24 kann beispielsweise mit der Einschleuseinrichtung 20 und/oder mit der ersten Ausschleuseinrichtung 22 und/oder mit dem Hängeförderer 14 und/oder mit der jeweiligen Transporteinheit 12A, 12B zum, insbesondere drahtlosen, Datenaustausch in Verbindung stehen. Durch Ansteuerung des Hängeförderers 14, der Einschleuseinrichtung 20 oder der Transporteinheiten 12A, 12B kann ein Abstand zwischen den Transporteinheiten 12A, 12B in Abhängigkeit ihres jeweiligen Ausschleusziels und/oder ihrer jeweiligen Masse und/oder ihrer jeweiligen Ausdehnung eingestellt werden.

Optional kann das Hängefördersystem 10 des Weiteren eine nicht dargestellte Ermittlungseinrichtung aufweisen, die dazu eingerichtet oder ausgebildet ist, eine Ausdehnung und/oder eine Masse jeder Transporteinheit 12A, 12B zu ermitteln. Die Ermittlungseinrichtung steht vorzugsweise mit der Steuereinrichtung 24 zum Datenaustausch in Verbindung.

Es versteht sich, dass für jede Transporteinheit 12A, 12B bekannt ist, ob eine Ausschleusung von der Förderstrecke 16 über die erste Ausschleuseinrichtung 22 erfolgen soll oder nicht. Beispielsweise kann ein Ausschleusziel der jeweiligen Transporteinheit vorbestimmt und bspw. in einer nicht dargestellten Datenbank oder einem nicht dargestellten Datenträger hinterlegt sein, um durch die Steuereinrichtung 24 ausgelesen zu werden.

Vorzugsweise ist die Steuereinrichtung 24 oder eine nicht dargestellte Auswerteeinheit der Steuereinrichtung 24 dazu eingerichtet, auf Basis von Ausschleusungsdaten, die vorzugsweise ein Ausschleusungsziel jeder Transporteinheit 12A, 12B angeben, zu bestimmen, ob die jeweilige Transporteinheit der Mehrzahl von Transporteinheiten dazu bestimmt ist, an der ersten Ausschleuseinrichtung 22 ausgeschleust zu werden oder nicht. Insbesondere kann die Steuereinrichtung 24 dazu eingerichtet sein, auf Basis der Ausschleusungsdaten zu bestimmen, ob die jeweilige Transporteinheit 12A, 12B dazu bestimmt ist, an der ersten Ausschleuseinrichtung 22 ausgeschleust zu werden oder die erste Ausschleuseinrichtung 22 entlang der Haupt- bzw. Förderstrecke 16 zu passieren.

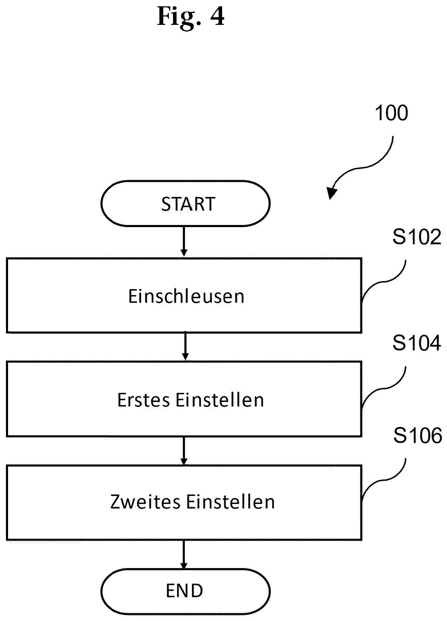

Die Fig. 4 zeigt ein Flussdiagramm eines Verfahrens 100 zum Betreiben eines Hängefördersystems 10. Die Erläuterung des Verfahrens 100 erfolgt figurenübergreifend.

In einem ersten Schritt S102 des Verfahrens 100 werden die Transporteinheiten 12A, 12B mittels der Einschleuseinrichtung 20 auf die Förderstrecke 16 des Hängeförderers 14 eingeschleust, wobei die Transporteinheiten 12A, 12B nacheinander auf die Förderstrecke 16 aufgegeben werden. Die Transporteinheiten 12A, 12B können bspw. in der Zuführstrecke 26 bereitgestellt sein, um von der Einschleuseinrichtung 20 auf die Förderstrecke 16 eingeschleust zu werden. Vorzugsweise erfolgt der Schritt S102 computergestützt.

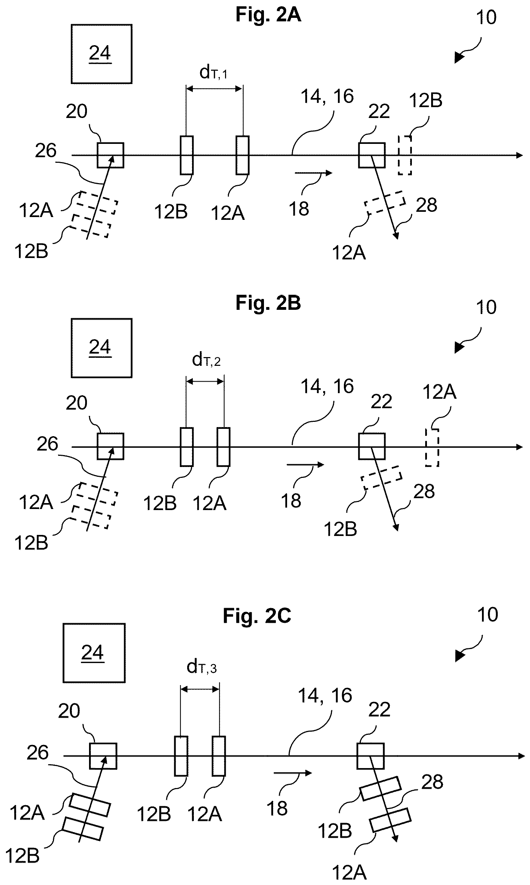

In einem zweiten Schritt S104 der Verfahrens 100 wird ein erster Abstand d_{T,1} zwischen den zwei aufeinanderfolgenden Transporteinheiten 12A, 12B eingestellt, wenn eine stromabwärtige Transporteinheit 12A der zwei aufeinanderfolgenden Transporteinheiten 12A, 12B dazu bestimmt ist, über die erste Ausschleuseinrichtung 22 ausgeschleust zu werden, und eine stromaufwärtige Transporteinheit 12B der zwei aufeinanderfolgenden Transporteinheiten 12A, 12B dazu bestimmt ist, die erste Ausschleuseinrichtung 22 entlang der Förderstrecke 16 zu passieren. Dieser Fall ist beispielsweise in der Fig. 2A dargestellt. Vorzugsweise erfolgt der Schritt S104 computergestützt.

In einem dritten Schritt S106 des Verfahrens 100 wird ein zweiter Abstand d_{T,2} zwischen den zwei aufeinanderfolgenden Transporteinheiten 12A, 12B eingestellt, wenn die stromaufwärtige Transporteinheit 12B der zwei aufeinanderfolgenden Transporteinheiten 12A, 12B dazu bestimmt ist, über die erste Ausschleuseinrichtung 22 ausgeschleust zu werden, und die stromabwärtige Transporteinheit 12A der zwei aufeinanderfolgenden Transporteinheiten 12A, 12B dazu bestimmt ist, die erste Ausschleuseinrichtung 22 entlang der Förderstrecke 16 zu passieren. Der erste Abstand d_{T,1} gemäß Fig. 2A ist hierbei größer als der zweite Abstand d_{T,2} gemäß Fig. 2B. Dieser Fall ist beispielsweise in der Fig. 2B dargestellt. Vorzugsweise erfolgt der Schritt S106 computergestützt.

Vorzugsweise erfolgt das wahlweise Einstellen des ersten Abstandes d_{T,1} oder des zweiten Abstandes d_{T,2} zwischen den zwei aufeinanderfolgenden Transporteinheiten 12A, 12B während des Einschleusens der Transporteinheiten 12A, 12B auf die Förderstrecke 16 des Hängeförderers 14. Alternativ kann das wahlweise Einstellen des ersten Abstandes d_{T,1} oder des zweiten Abstandes d_{T,2} zwischen den zwei aufeinanderfolgenden Transporteinheiten 12A, 12B zeitlich nach dem Einschleusen der Transporteinheiten 12A, 12B auf die Förderstrecke 16 des Hängeförderers 14 erfolgen.

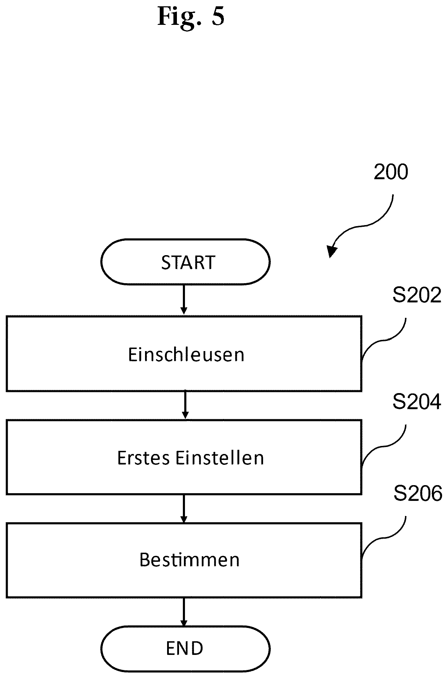

Die Fig. 5 zeigt ein Flussdiagramm eines Verfahrens 200 zum Betreiben eines Hängefördersystems 10. Die Erläuterung des Verfahrens 200 erfolgt figurenübergreifend.

In einem ersten Schritt S202 des Verfahrens 200 werden die Transporteinheiten 12A, 12B mittels der Einschleuseinrichtung 20 auf die Förderstrecke 16 des Hängeförderers 14 eingeschleust, wobei die Transporteinheiten 12A, 12B nacheinander auf die Förderstrecke 16 aufgegeben werden. Die Transporteinheiten 12A, 12B können bspw. in der Zuführstrecke 26, insbesondere auftragsrein, bereitgestellt sein, um von der Einschleuseinrichtung 20 auf die Förderstrecke 16 eingeschleust zu werden. Vorzugsweise erfolgt der Schritt S202 computergestützt.

In einem zweiten Schritt S204 des Verfahrens 200 wird ein erster Abstand d_{T,1} zwischen den zwei aufeinanderfolgenden Transporteinheiten 12A, 12B eingestellt, wenn eine stromabwärtige Transporteinheit 12A der zwei aufeinanderfolgenden Transporteinheiten 12A, 12B dazu bestimmt ist, über die erste Ausschleuseinrichtung 22 ausgeschleust zu werden, und eine stromaufwärtige Transporteinheit 12B der zwei aufeinanderfolgenden Transporteinheiten 12A, 12B dazu bestimmt ist, die erste Ausschleuseinrichtung 22 entlang der Förderstrecke 16 zu passieren. Diese Situation ist beispielsweise in der Fig. 2A dargestellt. Vorzugsweise erfolgt der Schritt S204 computergestützt.

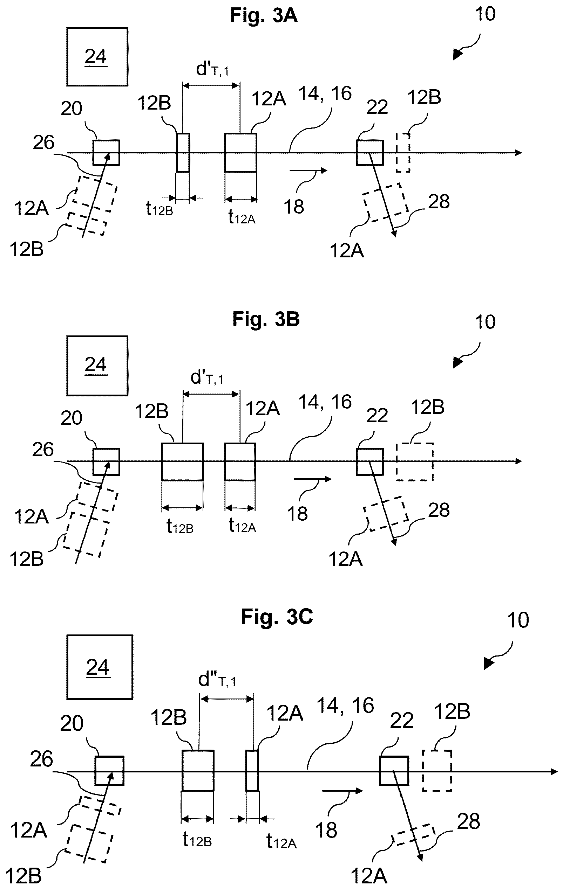

In einem dritten Schritt S206 des Verfahrens 200 wird eine Größe des ersten Abstandes d_{T,1} zwischen den zwei aufeinanderfolgenden Transporteinheiten 12A, 12B auf dem Hängeförderer 14 basierend auf einer, insbesondere körperlichen, Ausdehnung t_{12A}, t_{12B} (vgl. hierzu bspw. die Figuren 3A bis 3C) und/oder einer Masse der stromabwärtigen Transporteinheit 12A und/oder der stromaufwärtigen Transporteinheit 12B der zwei aufeinanderfolgenden Transporteinheiten 12A, 12B bestimmt. Vorzugsweise erfolgt der Schritt S206 computergestützt.

Vorzugsweise erfolgt das Einstellen des ersten Abstandes d_{T,1} zwischen den zwei aufeinanderfolgenden Transporteinheiten 12A, 12B während des Einschleusens der Transporteinheiten 12A, 12B auf die Förderstrecke 16 des Hängeförderers 14. Alternativ kann das Einstellen des ersten Abstandes d_{T,1} zwischen den zwei aufeinanderfolgenden Transporteinheiten 12A, 12B zeitlich nach dem Einschleusen der Transporteinheiten 12A, 12B auf die Förderstrecke 16 des Hängeförderers 14 erfolgen.

Der dritte Schritt S206 des Verfahrens 200 erfolgt vorzugsweise zeitlich vor dem zweiten Schritt S204 des Verfahrens 200. Alternativ können die Schritte S204 und S206 gleichzeitig erfolgen.

In einer bevorzugten Ausgestaltung des Schrittes S206 kann die Größe des ersten Abstandes d_{T,1} wahlweise entsprechend einer ersten Abstandsgröße d'_{T,1} oder entsprechend einer zweiten Abstandsgröße d"_{T,1} bestimmt werden, wobei die erste Abstandsgröße d'_{T,1} größer als die zweite Abstandsgröße d"_{T,1} ist, vgl. hierzu die Figuren 3A bis 3C. Sowohl die erste Abstandsgröße d'_{T,1} als auch die zweite Abstandsgröße d"_{T,1} sind größer als der zweite Abstand d_{T,2}. Mit anderen Worten gilt folgende Abstandsbeziehung: d'_{T,1} > d"_{T,1} > d_{T,2}.

Vorzugsweise wird im Schritt S206 die Größe des ersten Abstandes d_{T,1} entsprechend der ersten Abstandsgröße d'_{T,1}bestimmt, i) wenn die Ausdehnung t_{12A} der stromabwärtigen Transporteinheit 12A einen ersten Ausdehnungsschwellenwert überschreitet oder die Masse der stromabwärtigen Transporteinheit 12A einen ersten Massenschwellenwert überschreitet oder ii) wenn die Ausdehnung t_{12B} der stromaufwärtigen Transporteinheit 12B den ersten Ausdehnungsschwellenwert überschreitet und die Ausdehnung t_{12A} der stromabwärtigen Transporteinheit 12A einen zweiten Ausdehnungsschwellenwert, der kleiner als der erste Ausdehnungsschwellenwert ist, überschreitet.

Der erste Fall, wonach die Ausdehnung t_{12A} der stromabwärtigen Transporteinheit 12A einen ersten Ausdehnungsschwellenwert überschreitet oder die Masse der stromabwärtigen Transporteinheit 12A einen ersten Massenschwellenwert überschreitet, ist exemplarisch in der Fig. 3A dargestellt. Der zweite Fall, wonach die Ausdehnung t_{12B} der stromaufwärtigen Transporteinheit 12B den ersten Ausdehnungsschwellenwert überschreitet und die Ausdehnung t_{12A} der stromabwärtigen Transporteinheit 12A einen zweiten Ausdehnungsschwellenwert, der kleiner als der erste Ausdehnungsschwellenwert ist, überschreitet, ist exemplarisch in der Fig. 3B dargestellt. Es versteht sich, dass die Ausdehnungen t_{12A} und t_{12B} der Transporteinheiten 12A, 12B jeweils nicht - wie exemplarisch dargestellt - auf eine Tiefe in Förderrichtung 18 beschränkt sind. Die Ausdehnung kann zusätzlich oder alternativ eine Breite der Transporteinheit 12A, 12B quer zur Förderrichtung 18 und/oder eine Höhe der Transporteinheit 12A, 12B und/oder ein Volumen der Transporteinheit 12A, 12B oder eine andere geometrische Dimension umfassen.

Vorzugsweise wird im Schritt S206 die Größe des ersten Abstandes d_{T,1} entsprechend der zweiten Abstandsgröße d"_{T},1, die kleiner als die erste Abstandsgröße d'_{T,1} ist, bestimmt, i) wenn die Ausdehnung t_{12A} der stromabwärtigen Transporteinheit 12A den ersten Ausdehnungsschwellenwert nicht überschreitet oder die Masse der stromabwärtigen Transporteinheit 12A den ersten Massenschwellenwert nicht überschreitet und ii) wenn die Ausdehnung t_{12B} der stromaufwärtigen Transporteinheit 12B den ersten Ausdehnungsschwellenwert überschreitet und die Ausdehnung t_{12A} der stromabwärtigen Transporteinheit 12A den zweiten Ausdehnungsschwellenwert nicht überschreitet. Dieser Fall ist exemplarisch in der Fig. 3C dargestellt.

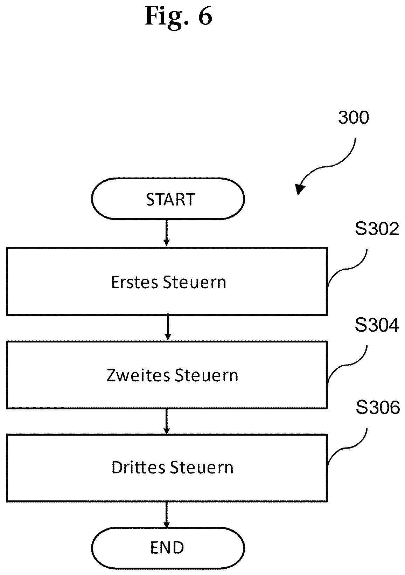

Die Fig. 6 zeigt ein Flussdiagramm eines computerimplementierten Verfahrens 300 zum Betreiben eines Hängefördersystems 10. Die Erläuterung des Verfahrens 300 erfolgt figurenübergreifend.

In einem ersten Schritt 302 des Verfahrens 300 wird die Einschleuseinrichtung 20 gesteuert, um die Transporteinheiten 12A, 12B nacheinander auf die Förderstrecke 16 des Hängeförderers 14 einzuschleusen. Die Transporteinheiten 12A, 12B können bspw. in der Zuführstrecke 26 bereitgestellt sein, um von der Einschleuseinrichtung 20 auf die Förderstrecke 16 eingeschleust zu werden.

In einem zweiten Schritt 304 des Verfahrens 300 wird der Hängeförderer 14 und/oder die Einschleuseinrichtung 20 und/oder die Transporteinheiten 12A, 12B gesteuert, um einen ersten Abstand d_{T,1} zwischen den zwei aufeinanderfolgenden Transporteinheiten 12A, 12B einzustellen, wenn eine stromabwärtige Transporteinheit 12A der zwei aufeinanderfolgenden Transporteinheiten 12A, 12B dazu bestimmt ist, über die erste Ausschleuseinrichtung 22 ausgeschleust zu werden, und eine stromaufwärtige Transporteinheit 12B der zwei aufeinanderfolgenden Transporteinheiten 12A, 12B dazu bestimmt ist, die erste Ausschleuseinrichtung 22 entlang der Förderstrecke 16 zu passieren. Dieser Fall ist beispielsweise in der Fig. 2A dargestellt.

In einem dritten Schritt 304 des Verfahrens 300 wird der Hängeförderer 14 und/oder die Einschleuseinrichtung 20 und/oder die Transporteinheiten 12A, 12B gesteuert, um einen zweiten Abstand d_{T,2} zwischen den zwei aufeinanderfolgenden Transporteinheiten 12A, 12B einzustellen, wenn die stromaufwärtige Transporteinheit 12B der zwei aufeinanderfolgenden Transporteinheiten 12A, 12B dazu bestimmt ist, über die erste Ausschleuseinrichtung 22 ausgeschleust zu werden, und die stromabwärtige Transporteinheit 12A der zwei aufeinanderfolgenden Transporteinheiten 12A, 12B dazu bestimmt ist, die erste Ausschleuseinrichtung 22 entlang der Förderstrecke 16 zu passieren, wobei der erste Abstand d_{T,1} größer als der zweite Abstand d_{T,2} ist. Dieser Fall ist beispielsweise in der Fig. 2B dargestellt.

Vorzugsweise erfolgt das wahlweise Einstellen des ersten Abstandes d_{T,1} oder des zweiten Abstandes d_{T,2} zwischen den zwei aufeinanderfolgenden Transporteinheiten 12A, 12B während des Einschleusens der Transporteinheiten 12A, 12B auf die Förderstrecke 16 des Hängeförderers 14.

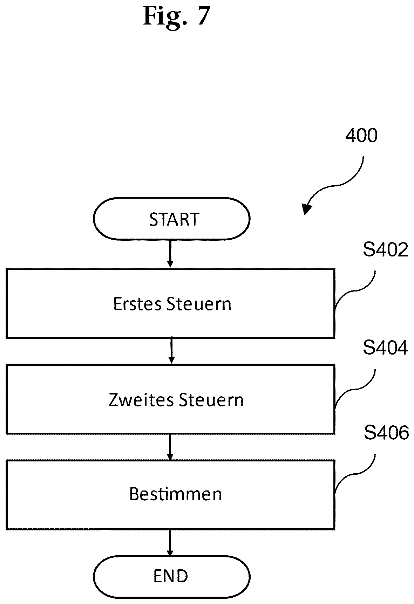

Alternativ kann das wahlweise Einstellen des ersten Abstandes d_{T,1} oder des zweiten Abstandes d_{T,2} zwischen den zwei aufeinanderfolgenden Transporteinheiten 12A, 12B zeitlich nach dem Einschleusen der Transporteinheiten 12A, 12B auf die Förderstrecke 16 des Hängeförderers 14 erfolgen. Die Fig. 7 zeigt ein Flussdiagramm eines computerimplementierten Verfahrens 400 zum Betreiben eines Hängefördersystems 10. Die Erläuterung des Verfahrens 400 erfolgt figurenübergreifend.

In einem ersten Schritt 402 des Verfahrens 400 wird die Einschleuseinrichtung 20 gesteuert, um die Transporteinheiten 12A, 12B nacheinander auf die Förderstrecke 16 des Hängeförderers 14 einzuschleusen. Die Transporteinheiten 12A, 12B können bspw. in der Zuführstrecke 26 bereitgestellt sein, um von der Einschleuseinrichtung 20 auf die Förderstrecke 16 eingeschleust zu werden.

In einem zweiten Schritt 404 des Verfahrens 400 wird der Hängeförderer 14 und/oder die Einschleuseinrichtung 20 und/oder die Transporteinheiten 12A, 12B gesteuert, um einen ersten Abstand d_{T,1} zwischen den zwei aufeinanderfolgenden Transporteinheiten 12A, 12B einzustellen, wenn eine stromabwärtige Transporteinheit 12A der zwei aufeinanderfolgenden Transporteinheiten 12A, 12B dazu bestimmt ist, über die erste Ausschleuseinrichtung 22 ausgeschleust zu werden, und eine stromaufwärtige Transporteinheit 12B der zwei aufeinanderfolgenden Transporteinheiten 12A, 12B dazu bestimmt ist, die erste Ausschleuseinrichtung 22 entlang der Förderstrecke 16 zu passieren.

In einem dritten Schritt 406 des Verfahrens 400 wird einer Größe des ersten Abstandes d_{T,1} zwischen den zwei aufeinanderfolgenden Transporteinheiten 12A, 12B auf dem Hängeförderer 14 basierend auf einer, insbesondere körperlichen, Ausdehnung t_{12A}, t_{12B} und/oder einer Masse der stromabwärtigen Transporteinheit 12A und/oder der stromaufwärtigen Transporteinheit 12B der zwei aufeinanderfolgenden Transporteinheiten 12A, 12B bestimmt.

Vorzugsweise erfolgt das Einstellen des ersten Abstandes d_{T,1} zwischen den zwei aufeinanderfolgenden Transporteinheiten 12A, 12B während des Einschleusens der Transporteinheiten 12A, 12B auf die Förderstrecke 16 des Hängeförderers 14. Alternativ kann das Einstellen des ersten Abstandes d_{T,1} zwischen den zwei aufeinanderfolgenden Transporteinheiten 12A, 12B zeitlich nach dem Einschleusen der Transporteinheiten 12A, 12B auf die Förderstrecke 16 des Hängeförderers 14 erfolgen.

## Patentansprüche

1. Hängefördersystem (10), aufweisend:
- eine Mehrzahl von Transporteinheiten (12A, 12B) zur Güterbeförderung;
- einen Hängeförderer (14) zum Fördern der Mehrzahl von Transporteinheiten (12A, 12B) entlang einer Förderstrecke (16) des Hängeförderers (14) stromabwärts in einer Förderrichtung (18);
- zumindest eine Einschleuseinrichtung (20), die dazu ausgebildet ist, die Mehrzahl von Transporteinheiten (12A, 12B) nacheinander auf die Förderstrecke (16) des Hängeförderers (14) einzuschleusen;
- eine erste Ausschleuseinrichtung (22) zum Ausschleusen von Transporteinheiten (12A, 12B) von der Förderstrecke (16), die stromabwärts der zumindest einen Einschleuseinrichtung (20) in oder an der Förderstrecke (16) angeordnet ist; und
- eine Steuereinrichtung (24) zur Steuerung des Hängeförderers (14) und/oder der zumindest Einschleuseinrichtung (20) und/oder der Mehrzahl von Transporteinheiten (12A, 12B);
**dadurch gekennzeichnet, dass**
- die Steuereinrichtung (24) dazu eingerichtet ist, einen ersten Abstand (d_{T,1}) zwischen zwei aufeinanderfolgenden Transporteinheiten (12A, 12B) der Mehrzahl von Transporteinheiten (12A, 12B) auf dem Hängeförderer (14) einzustellen, wenn eine stromabwärtige Transporteinheit (12A) der zwei aufeinanderfolgenden Transporteinheiten (12A, 12B) dazu bestimmt ist, über die erste Ausschleuseinrichtung (22) ausgeschleust zu werden, und eine stromaufwärtige Transporteinheit (12B) der zwei aufeinanderfolgenden Transporteinheiten (12A, 12B) dazu bestimmt ist, die erste Ausschleuseinrichtung (22) entlang der Förderstrecke (16) zu passieren, und
- die Steuereinrichtung (24) dazu eingerichtet ist, einen zweiten Abstand (d_{T,2}) zwischen den zwei aufeinanderfolgenden Transporteinheiten (12A, 12B) der Mehrzahl von Transporteinheiten (12A, 12B) auf dem Hängeförderer (14) einzustellen, wenn die stromaufwärtige Transporteinheit (12B) der zwei aufeinanderfolgenden Trans-porteinheiten (12A, 12B) dazu bestimmt ist, über die erste Ausschleuseinrichtung (22) ausgeschleust zu werden, und die stromabwärtige Transporteinheit (12A) der zwei aufeinanderfolgenden Transporteinheiten (12A, 12B) dazu bestimmt ist, die erste Ausschleuseinrichtung (22) entlang der Förderstrecke (16) zu passieren, wobei der erste Abstand (d_{T,1}) größer als der zweite Abstand (d_{T,2}) ist.

2. Hängefördersystem (10) nach Anspruch 1, wobei die Steuereinrichtung (24) dazu eingerichtet ist, wahlweise den ersten Abstand (d_{T,1}) oder den zweiten Abstand (d_{T,2}) einzustellen.

3. Hängefördersystem (10) nach Anspruch 1 oder 2, wobei die Steuereinrichtung (24) des Weiteren dazu eingerichtet ist, eine Größe des ersten Abstandes (d_{T,1}) zwischen den zwei aufeinanderfolgenden Transporteinheiten (12A, 12B) der Mehrzahl von Transporteinheiten (12A, 12B) auf dem Hängeförderer (14) basierend auf einer, insbesondere körperlichen, Ausdehnung (t_{12A}, t_{12B}), und/oder einer Masse der stromabwärtigen Transporteinheit (12A) der zwei aufeinanderfolgenden Transporteinheiten (12A, 12B) und/oder der stromaufwärtigen Transporteinheit (12B) der zwei aufeinanderfolgenden Transporteinheiten (12A, 12B) zu bestimmen.

4. Hängefördersystem (10) nach Anspruch 3, wobei die Steuereinrichtung (24) dazu eingerichtet ist, die Größe des ersten Abstandes (d_{T,1}) entsprechend einer ersten Abstandsgröße (d'_{T,1}) zu bestimmen
- wenn die Ausdehnung (t_{12A}) der stromabwärtigen Transporteinheit (12A) der zwei aufeinanderfolgenden Transporteinheiten (12A, 12B) einen ersten Ausdehnungsschwellenwert überschreitet oder die Masse der stromabwärtigen Transporteinheit (12A) der zwei aufeinanderfolgenden Transporteinheiten (12A, 12B) einen ersten Massenschwellenwert überschreitet oder
- wenn die Ausdehnung (t_{12B}) der stromaufwärtigen Transporteinheit (12B) der zwei aufeinanderfolgenden Transporteinheiten (12A, 12B) den ersten Ausdehnungsschwellenwert überschreitet und die Ausdehnung (t_{12A}) der stromabwärtigen Transporteinheit (12A) der zwei aufeinanderfolgenden Transporteinheiten (12A, 12B) einen zweiten Ausdehnungsschwellenwert, der kleiner als der erste Ausdehnungsschwellenwert ist, überschreitet.

5. Hängefördersystem (10) nach Anspruch 4, wobei die Steuereinrichtung dazu eingerichtet ist, die Größe des ersten Abstandes entsprechend einer zweiten Abstandsgröße (d'_{T,2}) zu bestimmen, die kleiner als die erste Abstandgröße (d'_{T,1}) ist,
- wenn die Ausdehnung (t_{12A}) der stromabwärtigen Transporteinheit (12A) der zwei aufeinanderfolgenden Transporteinheiten (12A, 12B) den ersten Ausdehnungsschwellenwert nicht überschreitet oder die Masse der stromabwärtigen Transporteinheit (12A) der zwei aufeinanderfolgenden Transporteinheiten (12A, 12B) den ersten Massenschwellenwert nicht überschreitet und
- wenn die Ausdehnung (t_{12B}) der stromaufwärtigen Transporteinheit (12B) der zwei aufeinanderfolgenden Transporteinheiten (12A, 12B) den ersten Ausdehnungsschwellenwert überschreitet und die Ausdehnung (t_{12A}) der stromabwärtigen Transporteinheit (12B) der zwei aufeinanderfolgenden Transporteinheiten (12A, 12B) den zweiten Ausdehnungsschwellenwert nicht überschreitet.

6. Hängefördersystem (10) nach einem der vorhergehenden Ansprüche, wobei die Steuereinrichtung (24) des Weiteren dazu eingerichtet ist, einen dritten Abstand (d_{T,3}) zwischen den zwei aufeinanderfolgenden Transporteinheiten (12A, 12B) der Mehrzahl von Transporteinheiten auf dem Hängeförderer (14) einzustellen, wenn die stromaufwärtige Transporteinheit (12B) und die stromabwärtige Transporteinheit (12A) der zwei aufeinanderfolgenden Transporteinheiten (12A, 12B) dazu bestimmt sind, über die erste Ausschleuseinrichtung (22) ausgeschleust zu werden, wobei der dritte Abstand (d_{T,3}) kleiner oder gleich dem zweiten Abstand (d_{T,2}) ist.

7. Hängefördersystem (10) nach Anspruch 6, wobei die Steuereinrichtung (24) dazu eingerichtet ist, wahlweise den ersten Abstand (d_{T,1}), den zweiten Abstand (d_{T,2}) oder den dritten Abstand (d_{T,3}) einzustellen.

8. Hängefördersystem (10) nach einem der vorhergehenden Ansprüche, wobei der Hängeförderer (14) ein Taktförderer zum getakteten Fördern der Mehrzahl von Transporteinheiten (12A, 12B) mit einer Mehrzahl von Mitnehmern ist, welche jeweils mit einer Transporteinheit (12A, 12B) der Mehrzahl von Transporteinheiten (12A, 12B) lösbar verbindbar sind.

9. Hängefördersystem (10) nach Anspruch 8, wobei jede Transporteinheit (12A, 12B) der Mehrzahl von Transporteinheiten eine Aufnahmeeinheit und einen Laufwagen, an welchem die Aufnahmeeinheit befestigt oder befestigbar ist, aufweist, wobei die Laufwagen mit den Mitnehmern des Taktförderers in Eingriff bringbar sind.

10. Hängefördersystem (10) nach Anspruch 8 oder 9, wobei die Mitnehmer eine, insbesondere konstante, Teilung aufweisen, und wobei der Abstand zwischen den zwei aufeinanderfolgenden Transporteinheiten (12A, 12B) einem ganzzahligen Vielfachen der Teilung entspricht.

11. Verfahren (100) zum Betreiben eines Hängefördersystems (10), das eine Mehrzahl von Transporteinheiten (12A) zur Güterbeförderung, einen Hängeförderer (14) zum Fördern der Mehrzahl von Transporteinheiten (12A, 12B) entlang einer Förderstrecke (16) stromabwärts in einer Förderrichtung (18), zumindest eine Einschleuseinrichtung (20) und eine erste Ausschleuseinrichtung (22) zur Ausschleusung von Transporteinheiten (12A, 12B) von der Förderstrecke (16), die stromabwärts der zumindest einen Einschleuseinrichtung (20) in oder an der Förderstrecke (16) angeordnet ist, aufweist, mit den folgenden Schritten:
- Einschleusen (S100), mittels der zumindest einen Einschleuseinrichtung (20), der Mehrzahl von Transporteinheiten auf die Förderstrecke (16) des Hängeförderers (14), wobei die Transporteinheiten (12A, 12B) nacheinander auf die Förderstrecke (16) aufgegeben werden,
- Erstes Einstellen (S102) eines ersten Abstandes (d_{T,1}) zwischen zwei aufeinanderfolgenden Transporteinheiten (12A, 12B) der Mehrzahl von Transporteinheiten, wenn eine stromabwärtige Transporteinheit (12A) der zwei aufeinanderfolgenden Transporteinheiten (12A, 12B) dazu bestimmt ist, über die erste Ausschleuseinrichtung (22) ausgeschleust zu werden, und eine stromaufwärtige Transporteinheit (12B) der zwei aufeinanderfolgenden Transporteinheiten (12A, 12B) dazu bestimmt ist, die erste Ausschleuseinrichtung (22) entlang der Förderstrecke (16) zu passieren, und
- Zweites Einstellen (S104) eines zweiten Abstandes (d_{T,2}) zwischen den zwei aufeinanderfolgenden Transporteinheiten (12A, 12B) der Mehrzahl von Transporteinheiten, wenn die stromaufwärtige Transporteinheit (12B) der zwei aufeinanderfolgenden Transporteinheiten (12A, 12B) dazu bestimmt ist, über die erste Ausschleuseinrichtung (22) ausgeschleust zu werden, und die stromabwärtige Transporteinheit (12A) der zwei aufeinanderfolgenden Transporteinheiten (12A, 12B) dazu bestimmt ist, die erste Ausschleuseinrichtung (22) entlang der Förderstrecke (16) zu passieren, wobei der erste Abstand (d_{T,1}) größer als der zweite Abstand (d_{T,2}) ist.

12. Verfahren (100) nach Anspruch 11, des Weiteren aufweisend einen Schritt des, insbesondere computergestützten, Bestimmens einer Größe des ersten Abstandes (d_{T,1}) zwischen den zwei aufeinanderfolgenden Transporteinheiten (12A, 12B) der Mehrzahl von Transporteinheiten auf dem Hängeförderer (14) basierend auf einer Ausdehnung und/oder einer Masse der stromabwärtigen Transporteinheit (12A) und/oder der stromaufwärtigen Transporteinheit (12B) der zwei aufeinanderfolgenden Transporteinheiten (12A, 12B).

13. Verfahren (100) nach Anspruch 12, wobei die Größe des ersten Abstandes (d_{T,1}) entsprechend einer ersten Abstandsgröße (d'_{T,1}) bestimmt wird:
- wenn die Ausdehnung (t_{12A}) der stromabwärtigen Transporteinheit (12A) einen ersten Ausdehnungsschwellenwert überschreitet oder die Masse der stromabwärtigen Transporteinheit (12A) einen ersten Massenschwellenwert überschreitet oder
- wenn die Ausdehnung (t_{12B}) der stromaufwärtigen Transporteinheit (12B) den ersten Ausdehnungsschwellenwert überschreitet und die Ausdehnung (t_{12A}) der stromabwärtigen Transporteinheit (12A) einen zweiten Ausdehnungsschwellenwert, der kleiner als der erste Ausdehnungsschwellenwert ist, überschreitet.

14. Verfahren (100) nach Anspruch 13, wobei die Größe des ersten Abstandes (d_{T,1}) entsprechend einer zweiten Abstandsgröße (d"_{T,1}) bestimmt wird, die kleiner als die erste Abstandgröße (d'_{T,1}) ist,
- wenn die Ausdehnung (t_{12A}) der stromabwärtigen Transporteinheit (12A) den ersten Ausdehnungsschwellenwert nicht überschreitet oder die Masse der stromabwärtigen Transporteinheit (12A) den ersten Massenschwellenwert nicht überschreitet und
- wenn die Ausdehnung (t_{12B}) der stromaufwärtigen Transporteinheit den ersten Ausdehnungsschwellenwert überschreitet und die Ausdehnung (t_{12A}) der stromabwärtigen Transporteinheit (12A) den zweiten Ausdehnungsschwellenwert nicht überschreitet.

## Claims

1. An overhead conveyor system (10) comprising:
- a plurality of transport units (12A, 12B) for conveying goods;
- an overhead conveyor (14) for conveying the plurality of transport units (12A, 12B) along a conveying path (16) of the overhead conveyor (14) downstream in a conveying direction (18);
- at least one feed device (20) configured to feed the plurality of transport units (12A, 12B) one after another onto the conveying path (16) of the overhead conveyor (14);
- a first discharge device (22) for discharging transport units (12A, 12B) from the conveying path (16), which is arranged downstream of the at least one feed device (20) in or at the conveying path (16); and
- a control device (24) for controlling the overhead conveyor (14) and/or the at least one feed device (20) and/or the plurality of transport units (12A, 12B);
**characterized in that**
- the control device (24) is configured to set a first distance (d_{T,1}) between two successive transport units (12A, 12B) of the plurality of transport units (12A, 12B) on the overhead conveyor (14) when a downstream transport unit (12A) of the two successive transport units (12A, 12B) is destined to be discharged via the first discharge device (22) and an upstream transport unit (12B) of the two successive transport units (12A, 12B) is destined to pass the first discharge device (22) along the conveying path (16), and
- the control device (24) is configured to set a second distance (d_{T,2}) between the two successive transport units (12A, 12B) of the plurality of transport units (12A, 12B) on the overhead conveyor (14) when the upstream transport unit (12B) of the two successive transport units (12A, 12B) is destined to be discharged via the first discharge device (22) and the downstream transport unit (12A) of the two successive transport units (12A, 12B) is destined to pass the first discharge device (22) along the conveying path (16), wherein the first distance (d_{T,1}) is greater than the second distance (d_{T,2}).

2. The overhead conveyor system (10) according to claim 1, wherein the control device (24) is configured to selectively set the first distance (d_{T,1}) or the second distance (d_{T,2}).

3. The overhead conveyor system (10) according to claim 1 or 2, wherein the control device (24) is further configured to determine a magnitude of the first distance (d_{T,1}) between the two successive transport units (12A, 12B) of the plurality of transport units (12A, 12B) on the overhead conveyor (14) based on an extension (t_{12A}, t_{12B}), in particular a physical extension (t_{12A}, t_{12B}), and/or a mass of the downstream transport unit (12A) of the two successive transport units (12A, 12B) and/or the upstream transport unit (12B) of the two successive transport units (12A, 12B).

4. The overhead conveyor system (10) according to claim 3, wherein the control device (24) is configured to determine the magnitude of the first distance (d_{T,1}) according to a first distance magnitude (d"_{T,1})
- when the extension (t_{12A}) of the downstream transport unit (12A) of the two successive transport units (12A, 12B) exceeds a first extension threshold value or the mass of the downstream transport unit (12A) of the two successive transport units (12A, 12B) exceeds a first mass threshold value or
- when the extension (t_{12B}) of the upstream transport unit (12B) of the two successive transport units (12A, 12B) exceeds the first extension threshold value and the extension (t_{12A}) of the downstream transport unit (12A) of the two successive transport units (12A, 12B) exceeds a second extension threshold value that is less than the first extension threshold value.

5. The overhead conveyor system (10) according to claim 4, wherein the control device is configured to determine the magnitude of the first distance according to a second distance magnitude (d'_{T,2}) that is less than the first distance magnitude (d'_{T,1}),
- when the extension (t_{12A}) of the downstream transport unit (12A) of the two successive transport units (12A, 12B) does not exceed the first extension threshold value or the mass of the downstream transport unit (12A) of the two successive transport units (12A, 12B) does not exceed the first mass threshold value and
- when the extension (t_{12B}) of the upstream transport unit (12B) of the two successive transport units (12A, 12B) exceeds the first extension threshold value and the extension (t_{12A}) of the downstream transport unit (12B) of the two successive transport units (12A, 12B) does not exceed the second extension threshold value.

6. The overhead conveyor system (10) according to any one of the preceding claims, wherein the control device (24) is further configured to set a third distance (d_{T,3}) between the two successive transport units (12A, 12B) of the plurality of transport units on the overhead conveyor (14) when the upstream transport unit (12B) and the downstream transport unit (12A) of the two successive transport units (12A, 12B) are destined to be discharged via the first discharge device (22), wherein the third distance (d_{T,3}) is less than or equal to the second distance (d_{T,2}).

7. The overhead conveyor system (10) according to claim 6, wherein the control device (24) is configured to selectively set the first distance (d_{T,1}), the second distance (d_{T,2}), or the third distance (d_{T,3}).

8. The overhead conveyor system (10) according to any one of the preceding claims, wherein the overhead conveyor (14) is an indexing conveyor for clocked conveyance of the plurality of transport units (12A, 12B) with a plurality of drivers, which are each detachably connectable to a transport unit (12A, 12B) of the plurality of transport units (12A, 12B).

9. The overhead conveyor system (10) according to claim 8, wherein each transport unit (12A, 12B) of the plurality of transport units comprises a receiving unit and a carriage to which the receiving unit is attached or attachable, wherein the carriages are engageable with the drivers of the indexing conveyor.

10. The overhead conveyor system (10) according to claim 8 or 9, wherein the drivers have a, in particular constant, pitch, and wherein the distance between two successive transport units (12A, 12B) corresponds to an integer multiple of the pitch.

11. A method (100) for operating an overhead conveyor system (10) comprising a plurality of transport units (12A) for conveying goods, an overhead conveyor (14) for conveying the plurality of transport units (12A, 12B) along a conveying path (16) downstream in a conveying direction (18), at least one feed device (20), and a first discharge device (22) for discharging transport units (12A, 12B) from the conveying path (16), which is arranged downstream of the at least one feed device (20) in or at the conveying path (16), the method comprising the following steps:
- Feeding (S100), by means of the at least one feed device (20), the plurality of transport units onto the conveying path (16) of the overhead conveyor (14), wherein the transport units (12A, 12B) are fed onto the conveying path (16) one after another,
- First setting (S102) a first distance (d_{T,1}) between two successive transport units (12A, 12B) of the plurality of transport units when a downstream transport unit (12A) of the two successive transport units (12A, 12B) is destined to be discharged via the first discharge device (22) and an upstream transport unit (12B) of the two successive transport units (12A, 12B) is destined to pass the first discharge device (22) along the conveying path (16), and
- Second setting (S104) a second distance (d_{T,2}) between the two successive transport units (12A, 12B) of the plurality of transport units when the upstream transport unit (12B) of the two successive transport units (12A, 12B) is destined to be discharged via the first discharge device (22) and the downstream transport unit (12A) of the two successive transport units (12A, 12B) is destined to pass the first discharge device (22) along the conveying path (16), wherein the first distance (d_{T,1}) is greater than the second distance (d_{T,2}).

12. The method (100) according to claim 11, further comprising a step of, in particular computer-assisted, determining a magnitude of the first distance (d_{T,1}) between the two successive transport units (12A, 12B) of the plurality of transport units on the overhead conveyor (14) based on an extension and/or a mass of the downstream transport unit (12A) and/or the upstream transport unit (12B) of the two successive transport units (12A, 12B).

13. The method (100) according to claim 12, wherein the magnitude of the first distance (d_{T,1}) is determined according to a first distance magnitude (d'_{T,1}):
- when the extension (t_{12A}) of the downstream transport unit (12A) exceeds a first extension threshold value or the mass of the downstream transport unit (12A) exceeds a first mass threshold value or
- when the extension (t_{12B}) of the upstream transport unit (12B) exceeds the first extension threshold value and the extension (t_{12A}) of the downstream transport unit (12A) exceeds a second extension threshold value that is less than the first extension threshold value.

14. The method (100) according to claim 13, wherein the magnitude of the first distance (d_{T,1}) is determined according to a second distance magnitude (d"_{T,1}) that is less than the first distance magnitude (d'_{T,1}),
- when the extension (t_{12A}) of the downstream transport unit (12A) does not exceed the first extension threshold value or the mass of the downstream transport unit (12A) does not exceed the first mass threshold value and
- when the extension (t_{12B}) of the upstream transport unit exceeds the first extension threshold value and the extension (t_{12A}) of the downstream transport unit (12A) does not exceed the second extension threshold value.

## Revendications

1. Système à convoyeur suspendu (10), présentant :
- une pluralité d'unités de transport (12A, 12B) pour le convoyage de marchandises ;
- un convoyeur suspendu (14) pour le convoyage de la pluralité d'unités de transport (12A, 12B) le long d'une voie de convoyage (16) du convoyeur suspendu (14) en aval dans une direction de convoyage (18) ;
- au moins un dispositif d'insertion (20) qui est conçu pour insérer la pluralité d'unités de transport (12A, 12B) les unes après les autres sur la voie de convoyage (16) du convoyeur suspendu (14) ;
- un premier dispositif d'évacuation (22) pour l'évacuation d'unités de transport (12A, 12B) de la voie de convoyage (16), lequel est disposé en aval de l'au moins un dispositif d'insertion (20) dans ou sur la voie de convoyage (16) ; et
- un dispositif de commande (24) pour la commande du convoyeur suspendu (14) et/ou de l'au moins un dispositif d'insertion (20) et/ou de la pluralité d'unités de transport (12A, 12B) ;
**caractérisé en ce que**
- le dispositif de commande (24) est configuré pour régler une première distance (d_{T,1}) entre deux unités de transport (12A, 12B) successives de la pluralité d'unités de transport (12A, 12B) sur le convoyeur suspendu (14) lorsqu'une unité de transport aval (12A) parmi les deux unités de transport (12A, 12B) successives est destinée à être évacuée par l'intermédiaire du premier dispositif d'évacuation (22), et qu'une unité de transport amont (12B) parmi les deux unités de transport (12A, 12B) successives est destinée à passer devant le premier dispositif d'évacuation (22) le long de la voie de convoyage (16), et
- le dispositif de commande (24) est configuré pour régler une deuxième distance (d_{T,2}) entre les deux unités de transport (12A, 12B) successives de la pluralité d'unités de transport (12A, 12B) sur le convoyeur suspendu (14) lorsque l'unité de transport amont (12B) parmi les deux unités de transport (12A, 12B) successives est destinée à être évacuée par l'intermédiaire du premier dispositif d'évacuation (22), et que l'unité de transport aval (12A) parmi les deux unités de transport (12A, 12B) successives est destinée à passer devant le premier dispositif d'évacuation (22) le long de la voie de convoyage (16), dans lequel la première distance (d_{T,1}) est supérieure à la deuxième distance (d_{T,2}).

2. Système à convoyeur suspendu (10) selon la revendication 1, dans lequel le dispositif de commande (24) est configuré pour régler au choix la première distance (d_{T,1}) ou la seconde distance (d_{T,2}).

3. Système à convoyeur suspendu (10) selon la revendication 1 ou 2, dans lequel le dispositif de commande (24) est en outre configuré pour déterminer une valeur de la première distance (d_{T,1}) entre les deux unités de transport (12A, 12B) successives de la pluralité d'unités de transport (12A, 12B) sur le convoyeur suspendu (14) sur la base d'une extension (t_{12A}, t_{12B}), en particulier physique, et/ou d'une masse de l'unité de transport aval (12A) parmi les deux unités de transport (12A, 12B) successives et/ou de l'unité de transport amont (12B) parmi les deux unités de transport (12A, 12B) successives.

4. Système à convoyeur suspendu (10) selon la revendication 3, dans lequel le dispositif de commande (24) est configuré pour déterminer la valeur de la première distance (d_{T,1}) en fonction d'une première valeur de distance (d'_{T,1})
- lorsque l'extension (t_{12A}) de l'unité de transport aval (12A) parmi les deux unités de transport (12A, 12B) successives dépasse un premier seuil d'extension ou lorsque la masse de l'unité de transport aval (12A) parmi les deux unités de transport (12A, 12B) successives dépasse un premier seuil de masse ou
- lorsque l'extension (t_{12B}) de l'unité de transport amont (12B) parmi les deux unités de transport (12A, 12B) successives dépasse le premier seuil d'extension et que l'extension (t_{12A}) de l'unité de transport aval (12A) parmi les deux unités de transport (12A, 12B) successives dépasse un second seuil d'extension qui est inférieur au premier seuil d'extension.

5. Système à convoyeur suspendu (10) selon la revendication 4, dans lequel le dispositif de commande est configuré pour déterminer la valeur de la première distance en fonction d'une seconde valeur de distance (d'_{T,2}) qui est inférieure à la première valeur de distance (d'_{T,1}),
- lorsque l'extension (t_{12A}) de l'unité de transport aval (12A) parmi les deux unités de transport (12A, 12B) successives ne dépasse pas le premier seuil d'extension ou lorsque la masse de l'unité de transport aval (12A) parmi les deux unités de transport (12A, 12B) successives ne dépasse pas le premier seuil de masse et
- lorsque l'extension (t_{12B}) de l'unité de transport amont (12B) parmi les deux unités de transport (12A, 12B) successives dépasse le premier seuil d'extension et que l'extension (t_{12A}) de l'unité de transport aval (12B) parmi les deux unités de transport (12A, 12B) successives ne dépasse pas le second seuil d'extension.

6. Système à convoyeur suspendu (10) selon l'une des revendications précédentes, dans lequel le dispositif de commande (24) est en outre configuré pour régler une troisième distance (d_{T,3}) entre les deux unités de transport (12A, 12B) successives de la pluralité d'unités de transport sur le convoyeur suspendu (14) lorsque l'unité de transport amont (12B) et l'unité de transport aval (12A) parmi deux unités de transport (12A, 12B) successives sont destinées à être évacuées par l'intermédiaire du premier dispositif d'évacuation (22), dans lequel la troisième distance (d_{T,3}) est inférieure ou égale à la deuxième distance (d_{T,2}).

7. Système à convoyeur suspendu (10) selon la revendication 6, dans lequel le dispositif de commande (24) est configuré pour régler au choix la première distance (d_{T,1}), la deuxième distance (d_{T,2}) ou la troisième distance (d_{T,3}).

8. Système à convoyeur suspendu (10) selon l'une des revendications précédentes, dans lequel le convoyeur suspendu (14) est un convoyeur cadencé pour le convoyage cadencé de la pluralité d'unités de transport (12A, 12B) avec une pluralité de moyens d'entraînement qui peuvent être reliés de manière amovible à respectivement une unité de transport (12A, 12B) parmi la pluralité d'unités de transport (12A, 12B).

9. Système à convoyeur suspendu (10) selon la revendication 8, dans lequel chaque unité de transport (12A, 12B) parmi la pluralité d'unités de transport présente une unité de réception et un chariot sur lequel l'unité de réception est fixée ou peut être fixée, dans lequel les chariots peuvent être mis en prise avec les moyens d'entraînement du convoyeur cadencé.

10. Système à convoyeur suspendu (10) selon la revendication 8 ou 9, dans lequel les moyens d'entraînement présentent un pas, en particulier constant, et dans lequel la distance entre les deux unités de transport (12A, 12B) successives correspond à un multiple entier du pas.

11. Procédé (100) permettant de faire fonctionner un système à convoyeur suspendu (10) présentant une pluralité d'unités de transport (12A) pour le convoyage de marchandises, un convoyeur suspendu (14) pour le convoyage de la pluralité d'unités de transport (12A, 12B) le long d'une voie de convoyage (16) en aval dans une direction de convoyage (18), au moins un dispositif d'introduction (20) et un premier dispositif d'évacuation (22) pour l'évacuation d'unités de transport (12A, 12B) de la voie de convoyage (16) disposé en aval de l'au moins un dispositif d'introduction (20) dans ou sur la voie de convoyage (16), comportant les étapes suivantes :
- introduction (S100), au moyen de l'au moins un dispositif d'introduction (20), de la pluralité d'unités de transport sur la voie de convoyage (16) du convoyeur suspendu (14), dans lequel les unités de transport (12A, 12B) sont chargées successivement sur la voie de convoyage (16),
- premier réglage (S102) d'une première distance (d_{T,1}) entre deux unités de transport (12A, 12B) successives de la pluralité d'unités de transport lorsqu'une unité de transport aval (12A) parmi les deux unités de transport (12A, 12B) successives est destinée à être évacuée par l'intermédiaire du premier dispositif d'évacuation (22), et qu'une unité de transport amont (12B) parmi les deux unités de transport (12A, 12B) successives est destinée à passer devant le premier dispositif d'évacuation (22) le long de la voie de convoyage (16), et
- second réglage (S104) d'une deuxième distance (d_{T,2}) entre les deux unités de transport (12A, 12B) successives de la pluralité d'unités de transport lorsque l'unité de transport amont (12B) parmi les deux unités de transport (12A, 12B) successives est destinée à être évacuée par l'intermédiaire du premier dispositif d'évacuation (22), et que l'unité de transport aval (12A) parmi les deux unités de transport (12A, 12B) successives est destinée à passer devant le premier dispositif d'évacuation (22) le long de la voie de convoyage (16), dans lequel la première distance (d_{T,1}) est supérieure à la deuxième distance (d_{T,2}).

12. Procédé (100) selon la revendication 11, présentant en outre une étape de détermination, en particulier assistée par ordinateur, d'une valeur de la première distance (d_{T,1}) entre les deux unités de transport (12A, 12B) successives de la pluralité d'unités de transport sur le convoyeur suspendu (14) sur la base d'une extension et/ou d'une masse de l'unité de transport aval (12A) et/ou de l'unité de transport amont (12B) parmi les deux unités de transport (12A, 12B) successives.

13. Procédé (100) selon la revendication 12, dans lequel la valeur de la première distance (d_{T,1}) est déterminée en fonction d'une première valeur de distance (d'_{T,1}) :
- lorsque l'extension (t_{12A}) de l'unité de transport aval (12A) dépasse un premier seuil d'extension ou lorsque la masse de l'unité de transport aval (12A) dépasse un premier seuil de masse, ou
- lorsque l'extension (t_{12B}) de l'unité de transport amont (12B) dépasse le premier seuil d'extension et que l'extension (t_{12A}) de l'unité de transport aval (12A) dépasse un second seuil d'extension qui est inférieur au premier seuil d'extension.

14. Procédé (100) selon la revendication 13, dans lequel la valeur de la première distance (d_{T,1}) est déterminée en fonction d'une seconde valeur de distance (d"_{T,1}) qui est inférieure à la première valeur de distance (d'_{T,1}),
- lorsque l'extension (t_{12A}) de l'unité de transport aval (12A) ne dépasse pas le premier seuil d'extension ou lorsque la masse de l'unité de transport aval (12A) ne dépasse pas le premier seuil de masse, et
- lorsque l'extension (t_{12B}) de l'unité de transport amont dépasse le premier seuil d'extension et que l'extension (t_{12A}) de l'unité de transport aval (12A) ne dépasse pas le second seuil d'extension.
